# EUROPEAN PATENT APPLICATION

(11) **EP 3 734 888 A1**
(43) Date of publication of application: **04.11.2020**
(21) Application number: 19172651.2
(22) Date of filing: 03.05.2019
(51) Int. Cl.: H04L 5/00

(54) **METHODS AND APPARATUSES FOR JOINT UPDATE OF TRANSMISSION AND RECEPTION SETTINGS IN A WIRELESS COMMUNICATION SYSTEM**

(71) Applicant: Fraunhofer Gesellschaft zur Förderung der angewandten Forschung e.V., 80686 München (DE)
(72) Inventor: Varatharaajan, Sutharshun, 91058 Erlangen (DE); Grossmann, Marcus, 91058 Erlangen (DE)
(74) Representative: Groth & Co. KB

(57) **Abstract**

The present disclosure relates to methods and apparatuses for a joint update of Tx-settings and Rx- settings at a UE (400). The method performed by the UE comprises: receiving (301) via a DCI, or MAC-CE, a TCI-state, and at least one PUCCH-SpatialRelationlnfo configuration indication, wherein the indicated TCI-state configuration comprises an DL RS ID with at least one QCL, reference and the indicated PUCCH, or receiving (301) from the gNB via a DCI, or via a MAC-CE, a TCI-state configuration indication, wherein the indicated TCI-state configuration comprises an DL RS ID with at least one QCL reference and an ID of at least one PUCCH-SpatialRelationlnfo configuration; applying (302) information in said at least one QCL reference associated to at least a PDSCH, or a CORESET, and applying (303) said at least one PUCCH-SpatialRelationlnfo configuration to at least one PUCCH resource configured for transmission in uplink, UL to said gNB.

## Description

### TECHNICAL FIELD

The present disclosure relates to the field of wireless communications, and in particular, to methods and apparatuses for joint update of transmission and receptions setting of a User Equipment (UE)

### BACKGROUND

The physical downlink control channel (PDCCH) and the physical downlink shared channel (PDSCH), [1] [2], are the physical layer channels in 3^{rd} Generation Partnership Project Release 15 (3GPP Rel. 15)3 that carry the control information and the data respectively in the downlink (DL) to the user equipment (UE). The content of the PDCCH may be any of, and not restricted to, the following [2]:
- System information broadcast
- Random access information
- Paging information
- Downlink control information (DCI) that schedules the PDSCH/PUSCH, provides uplink (UL) power control information, triggers UL sounding reference signals (SRS), etc.

The PDCCH is configured at the Radio Resource Control (RRC) layer level by the radio network node or radio base station known also as gNodeB (or gNB) [3]. The PDCCHs are transmitted on Control Resource Sets (CORESETs) - a set of resource blocks carrying the control information. The RRC configuration of a CORESET is provided in **Configuration 1** below [3]. Each CORESET is comprised of PDCCH(s) linked to a search space configuration, where the PDCCH is either part of common search space (CSS) or a UE-specific search space (USS). PDCCHs belonging to the CSS usually contain information that is broadcast by the gNB to all the UEs like the system information broadcast or paging information. The PDCCHs belonging to the UE specific search space contain UE specific information such as the DCI to schedule PDSCH/PUSCH or SRS trigger, etc.

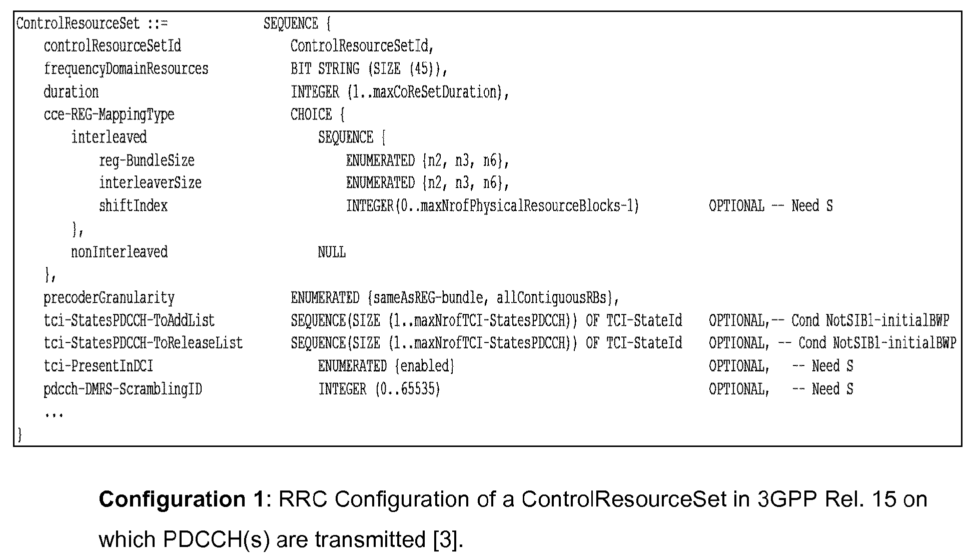

In the time-frequency resources, the PDSCH/PDCCH are transmitted, the Demodulation Reference Signals (DMRS) are also embedded that help in coherent demodulation of the PDCCH/PDSCH. The DMRS are comprised of a set of DMRS ports, an abstraction of a data transmission layer at the transmitter. The number of DMRS ports determines the number of layers transmitted in the PDSCH/PDCCH. The index of a certain port determines the time-frequency pattern of the DMRS, and the amplitude and phase of the DMRS in each resource element. The DMRS is used for channel estimation at the UE to coherently demodulate the PDSCH/PDCCH transmitted on the DMRS ports. In the case of PDCCH, multiple PDCCHs are usually transmitted in a CORESET. Therefore, the term 'DMRS ports of a CORESET' denotes the DMRS ports associated with the PDCCHs transmitted on the CORESET.

An important parameter in the transmission of the PDCCH and the PDSCH is the 'Transmission Configuration Indication'- state (TCI-state) or 'Transmission Configuration Indictor'- state. In 3GPP Rel. 15, the indication of how the control or the shared channel is transmitted by the gNB and what assumptions the UE must consider while receiving them is done via Reference Signals (RSs). A TCI state consists of the following [3]:
- One of more reference signal(s)
- For each reference signal, one or more quasi-colocation (QCL) assumptions to be taken from the reference signal

Applying a TCI-state to a CORESET/PDSCH implies that the DMRS ports of the PDCCH(s) in the CORESET/PDSCH shall be assumed to be quasi-co-located with the reference signals mentioned in the TCI-state according to the corresponding quasi-co-location assumptions for the reference signal mentioned in the TCI-state. Assuming that the DMRS ports of the PDCCH(s) in a CORESET/PDSCH are 'quasi-co-located' with a DL RS means that certain channel parameters such as Doppler shift/spread, delay spread, average delay and/or Transmission (Tx) beam direction are assumed to be the same for the DL RS and the DMRS ports in which the CORESET/PDSCH are transmitted. Four different Quasi-Co-Location (QCL) types may be denoted in 3GPP Rel. 15 [3]:
- QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Consider a TCI-state consisting of reference signal A with QCL assumption 'QCL-typeA' and reference signal B with QCL-assumption 'QCL-TypeD'. Applying this TCI-state to a CORESET/PDSCH with the given quasi-colocation assumptions means that the UE shall assume the same Doppler shift, Doppler spread, average delay and delay spread for the DMRS ports of the CORESET/PDSCH and reference signal A, and the same spatial Rx filter to receive reference signal B and the DMRS ports of the CORESET/PDSCH.

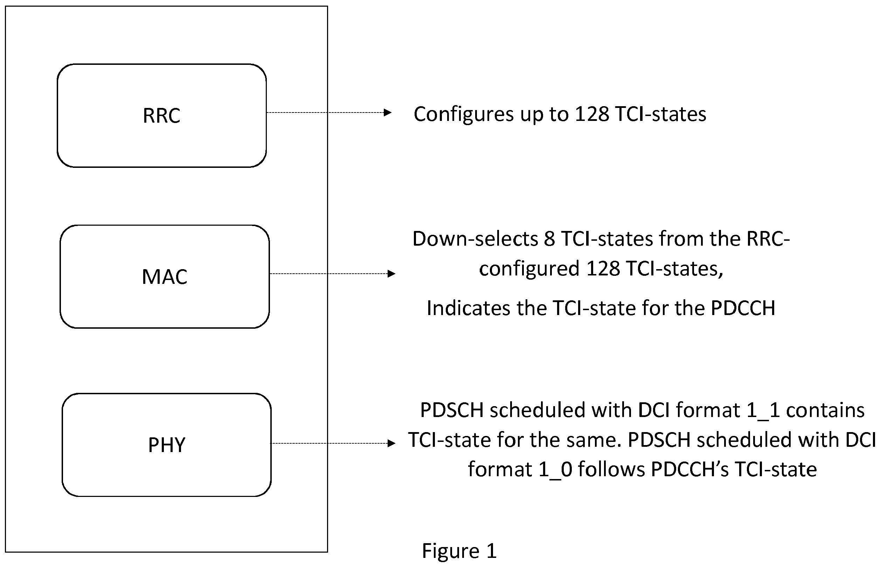

The TCI-state is used to mention how to receive a PDSCH or a CORESET of the PDCCH. The RRC parameter TCI-State defined in TS 38.331 [3] of 3GPP Rel. 15 is shown in Fig. 1. One or more of the parameters QCL-Info is/are included in the TCI-state that provide(s) the QCL assumptions associated with the TCI-state. Usually, the TCI state that is used to schedule a PDCCH or the PDSCH contains channel state information reference signals (CSI-RS) or synchronization signal blocks (SSB) along with the QCL assumptions for each reference signal. The RS in the TCI-state is usually a RS that the UE has measured before so that it can use it as a reference to receive the DMRS of the PDSCH/PDCCH and hence demodulate the same.

In FR2 (Frequency Range 2), where the gNB and UE establish connection via spatially selective beams, the TCI-state is used to indicate the direction in which the UE has to receive. When a CORESET/PDSCH is indicated with a TCI-state containing a DL RS with QCL assumption set to 'QCL-typeD', the gNB is essentially indicating that the PDCCH on the CORESET/PDSCH is transmitted with the same spatial Tx beam/filter as the DL RS. Therefore, the application of the TCI-state to the CORESET/PDSCH means that the UE receives both the DL RS and the CORESET/PDSCH with the spatial Rx beam/filter.

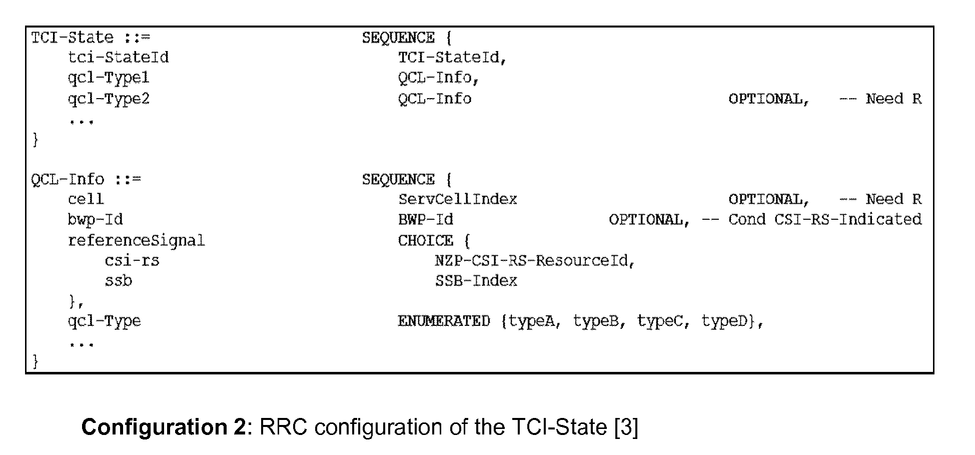

The indication of the TCI-state for PDSCH scheduling in 3GPP Rel. 15 can happen in two ways as follows:
1) DCI-indication of TCI-state for PDSCH: The higher-layer parameter tci-PresentInDCI is set to 'enabled' in this case and the DCI format 1_1 is used in the PDSCH-scheduling CORESET [4]. The following steps are followed to indicate the TCI-state for the PDSCH:
   a) The UE is configured by the higher-layer (RRC) with a maximum of 128 TCI-states.
   b) A control element (CE) message to the UE by the MAC layer, every now and then depending on the UE's mobility, down-selects 8 TCI-states from the 128 TCI-states configured by the RRC. Once the CE message for the down-selection is received by the Medium Access Control (MAC) layer, the UE applies the down-selection from the RRC-configured TCI-states after 3ms after the transmission the Hybrid Automatic Repeat reQuest (HARQ) Acknowledgment (ACK) for the PDSCH transport block carrying the MAC-CE message.
   c) The CORESET schedules the PDSCH via a DCI of a PDCCH transmitted on the CORESET by indicating one of the 8 TCI-states down-selected by the MAC-CE message in a 3-bit field in the DCI (DCI format 1_1) for the reception of the PDSCH [4].
2) MAC-CE based TCI-state indication [5]: The higher-layer parameter tci-PresentInDCI is not configured. The DCI format 1_0 is used in the PDSCH-scheduling CORESET [2]. The following steps are followed to determine the TCI-state of the PDSCH:
   a) The UE is configured by the higher-layer (RRC) with a maximum of 128 TCI-states.
   b) A MAC-CE message containing the CORESET, say with ID 'A', and the TCI-state (one chosen from the 128 states configured by the RRC) to be used for the reception of the same is sent to the UE [5].
   c) The PDSCH is scheduled by the CORESET 'A' with DCI format 1_0. The TCI-state for receiving the PDSCH is the same as the one indicated by the MAC-CE for the scheduling CORESET, i.e., the DMRS for the PDSCH uses the same QCL assumptions as the source RSs mentioned in the indicated TCI-state for the PDCCH by the MAC-CE.

As mentioned above, the MAC-CE indicates the TCI-state to be used for the PDCCH. The physical layer can only mention the TCI-state of the PDSCH. An illustration of the roles of different layers (RRC, MAC and PHY) in the configuration and indication of TCI-states is depicted in **Figure 1****.**

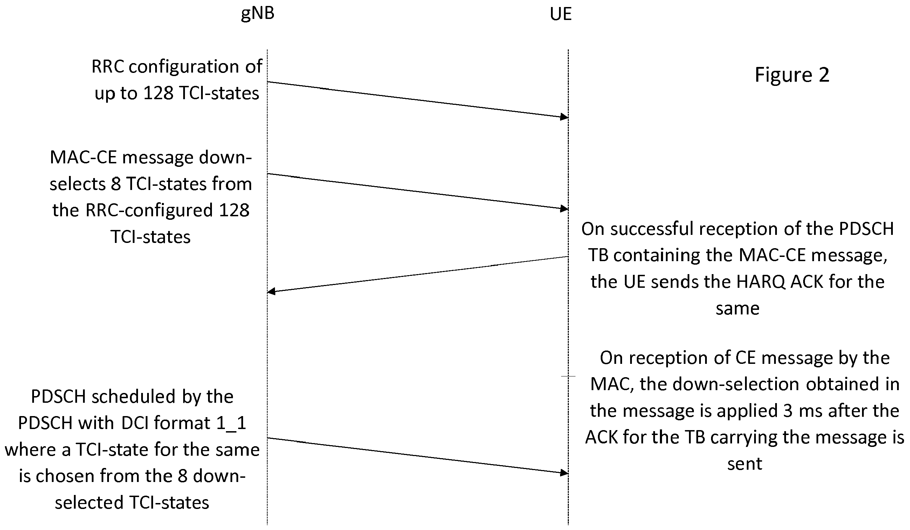

**Figure 2** depicts a procedure, involving a gNB and a UE, of configuring TCI-states and indication of the same for the scheduled PDSCH using DCI.

In 3GPP Rel. 15, the indication of the TCI-state for a CORESET in the PDCCH can be performed only via a MAC-CE message. For the TCI-state of a CORESET in the PDCCH to be updated, the following sequence of events must happen:
The MAC-CE message containing the ID of the CORESET *Cᵢ* and the new TCI-state ID *T_{i'}* for the same is prepared by the gNB to be sent to the UE. The CORESET *Cᵢ* currently uses the TCI-state *Tᵢ* for transmission.
1) A CORESET that belongs to the UE-specific search space (either *Cᵢ* itself or a different CORESET *Cⱼ*) schedules the PDSCH that carries the MAC-CE containing the CORESET ID *Cᵢ* and its updated TCI-state *T*_{*i*'} via a DCI in the PDCCH transmitted on the CORESET.
   a) If the PDSCH is scheduled with DCI format 1_0, the TCI-state of the PDSCH follows that of the CORESET scheduling it.
   b) If the PDSCH is scheduled with DCI format 1_1 and:
      i) if the higher-layer parameter tci-PresentlnDCI is set to 'enabled', the TCI-state for the PDSCH is mentioned in the 3-bit 'TCI' field in the DCI from the TCI-states down-selected by the latest MAC-CE down-selection message.
      ii) if the higher-layer parameter tci-PresentlnDCI is not configured, the TCI-state of the PDSCH follows that of the CORESET scheduling it.
2) When the UE receives the MAC-CE message, the UE applies the activation command, i.e., applies the QCL assumptions for the CORESET *Cᵢ* mentioned in the TCI-state *T_{i'}*, 3 ms after the slot where the UE transmits HARQ-ACK information for the PDSCH TB providing the MAC-CE message with the TCI-state indication [2].

As described above, the beam/spatial filter/direction in which a certain DL RS or DL channel is transmitted is indicated via a TCI-state by the gNB. Similarly, the beam/spatial filter/direction in which an UL RS or UL channel must be transmitted is indicated by a parameter called spatialRelationlnfo. The spatialRelationlnfo is separately configured for Physical UL Control Channel (PUCCH) and Sounding Reference Signals (SRS).

A PUCCH resource is an RRC configured space in a certain format (format 0, 1, 2, 3) in a certain UL bandwidth-part (BWP) to send one or more of the following UL control information (UCI): HARQ ACK/NACK for PDSCH, scheduling requests (SR), CSI. Four PUCCH resource sets are configured by the gNB via the RRC, with a resource in each resource set capable of carrying a certain load of control channel in the UL [2]. The maximum number of UCI information bits the UE can transmit using a PUCCH resource in the PUCCH resource set is provided by the parameter *maxPayloadMinus1* in the PUCCH resource set configuration [2]. The maximum number of PUCCH resources in the first PUCCH resource set is 32 and the maximum number of PUCCH resources in the other PUCCH resource sets is 8. The RRC configuration of a PUCCH resource in 3GPP Rel. 15 is provided in **Configuration 3** below [3].

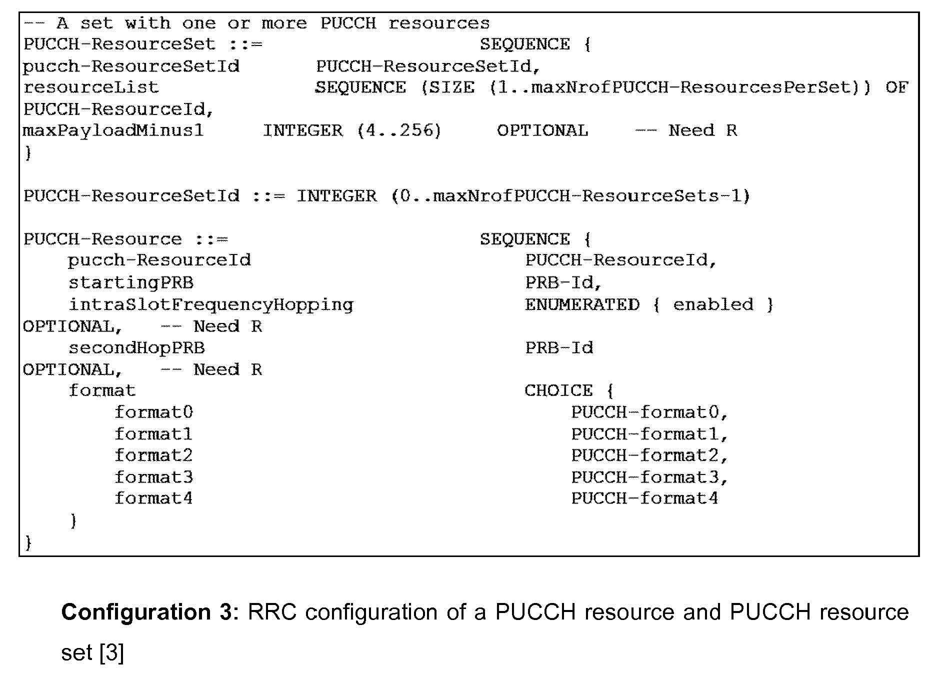

If the UE transmits *O*_{UCI} UCI information bits, that include HARQ-ACK information bits, the UE determines the PUCCH resource set for UCI transmission to be [2]:
- The first PUCCH resource set with *pucch-ResourceSetld* = 0 if *O*_{UCI} ≤ 2 including 1 or 2 HARQ-ACK information bits and a positive or negative SR on one SR transmission occasion if transmission of HARQ-ACK information and SR occurs simultaneously, or
- The second PUCCH resource set with *pucch-ResourceSetId* = 1, if provided by higher layers, if 2 < *O*_{UCI} ≤ *N*₂ where *N*₂ is provided by *maxPayloadMinus1* for the PUCCH resource set with *pucch-ResourceSetId* = 1, or
- The third PUCCH resource set with *pucch-ResourceSetId* = 2, if provided by higher layers, if *N*₂ < *O*_{UCI} ≤ *N*₃ where *N*₃ is provided by *maxPayloadMinus1* for the PUCCH resource set with *pucch-ResourceSetId* = 2, or
- The fourth set of PUCCH resources with *pucch-ResourceSetId* = 3, if provided by higher layers, if *N*₃ < *O*_{UCI} ≤ 1706.

The PUCCH resources to carry the various types of UCI - HARQ ACK/NACKs for PDSCH, SRs and CSI - are configured as follows:
- The PUCCH resource to carry the HARQ ACK/NACK for a PDSCH, is indicated by a 3-bit PUCCH resource indicator field in the DCI that scheduled by the PDSCH. The mapping from the PUCCH resource indicator field in the DCI to a PUCCH resource in the four PUCCH resource sets configured by the gNB via the RRC is given in TS 38.214 [1].
- The PUCCH resources to carry the SRs and the CSI are configured by the gNB via the RRC.

The transmission of the UL control channel is thus configured by the gNB.

An SRS resource is a particular pattern of reference symbols in time, frequency and code transmitted by all or a subset of UE's antenna ports in the UL used to sound the UL channel. The UE is configured by the gNB via the RRC with one or more SRS resource sets, with each SRS resource set consisting of one or more SRS resources.

The spatialRelationInfo configures a DL RS resource or an SRS resource that the UE shall use as a reference to determine the beam/spatial filter/direction for the UL RS resource or UL channel. The higher-layer configuration of the spatialRelationlnfo for SRS is performed for each SRS resource as shown in **Configuration 4.** In the case of PUCCH, spatialRelationlnfo is configured in the higher-layer parameter PUCCH-SpatialRelationlnfo as shown in **Configuration 5.**

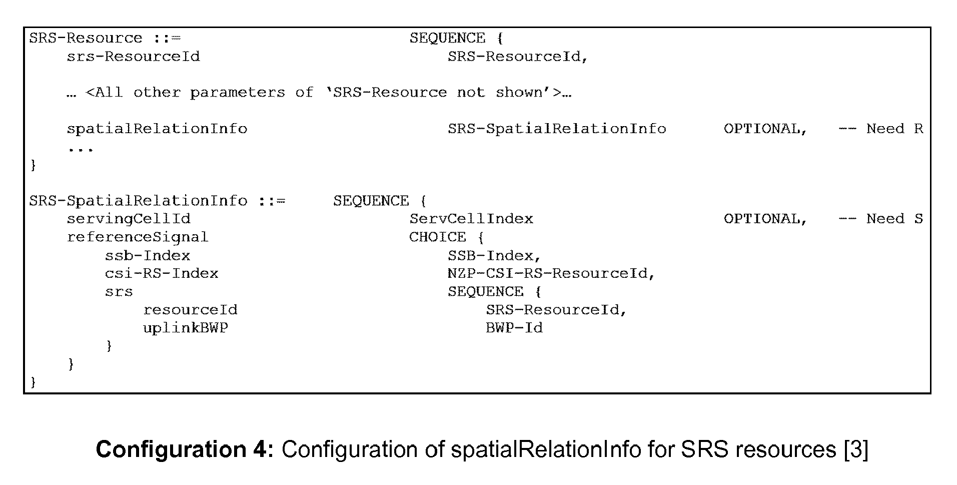

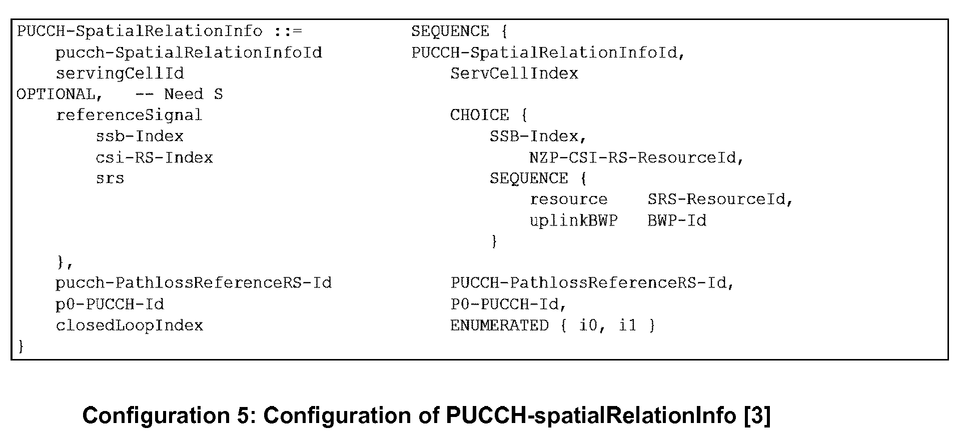

The application of spatialRelationlnfo to an SRS resource or a PUCCH resource results in the following UE behavior:
- If an SRS/PUCCH resource 'U' is applied with SRS-SpatialRelationlnfo/PUCCH-SpatialRelationlnfo that contains an NZP-CSI-RS-Resourceld 'D1' set to the parameter 'referenceSignal', the UE transmits the SRS/PUCCH resource 'U' with the same spatial filter used to receive the Non-zero-power CSI-RS (NZP-CSI-RS) resource `D1'.
- If an SRS/PUCCH resource 'U' is applied with SRS-SpatialRelationInfo/PUCCH-SpatialRelationlnfo that contains an SSB-Index 'D2' set to the parameter 'referenceSignal', the UE transmits the SRS/PUCCH resource 'U' with the same spatial filter used to receive the SSB resource 'D2'.
- If an SRS/PUCCH resource 'U' is applied with SRS-SpatialRelationlnfo/PUCCH-SpatialRelationlnfo that contains an SRS resource 'U1' in UL-BWP 'B_u' set to the parameter 'referenceSignal', the UE transmits the SRS/PUCCH resource 'U' with the same spatial filter used to transmit the SRS resource 'U1'.

The beam(s) used to transmit the PUCCH resource(s), which is given by PUCCH-SpatialRelationlnfo parameter(s), also determine the beams used to transmit the physical UL shared channel (PUSCH) in the case of single port UL transmissions which is commonly used in FR2 deployments.

As observed in the figures and the description above, the spatialRelationInfo to be applied for an SRS resource (the spatial filter to be used for an SRS resource) is indicated by the RRC. On the other hand, for a PUCCH resource, the spatialRelationInfo to be applied is indicated via MAC-CE signaling by the gNB-the UE receives a MAC-CE with the MAC PDU subheader indicating the PUCCH-Resourceld and the ID of the corresponding PUCCH-spatialRelationlnfo configured by the RRC to be applied to the PUCCH resource in a cell and UL BWP. Therefore, when a PUCCH or SRS resource is scheduled for transmission, the spatial filter must be applied by the UE according to the spatialRelationlnfo configured for that specific resource by the gNB. When the spatialRelationlnfo is not configured for an SRS or PUCCH resource, the decision on which spatial filter to use for the resource is left to UE implementation. The physical UL shared channel (PUSCH) that carries the payload in the UL usually follows the spatial relation info applied to a certain SRS or PUCCH.

The setting of spatialRelationlnfo with DL reference signals such as a CSI-RS resource or SSB resource in the parameter 'referenceSignal' is especially helpful when the UE satisfies beam correspondence [6]. A simple explanation for the term 'beam correspondence' is that the beam formed in a specific direction by the UE when it receives is roughly the same as the beam it forms in same direction when it transmits in terms of the effective isotropic radiated power (EIRP). Therefore, when the DL sounding of the channel is performed and a beam decision is made for DL transmission, assigning the DL RS transmitted in the direction of the selected beam in the spatialRelationlnfo of UL PUCCH/SRS resources ensures the transmission of the UL beam in the same direction as the reception of the DL beam.

From the prior art or state of the art description above, the configuration and the indication of the UE settings to receive the DL channels (QCL assumptions) and transmitting in the UL (Tx beam direction for SRS and PUCCH, power control settings and pathloss reference signals to measure in the DL for PUCCH transmission) by the gNB can be understood. The processes of determining the UE's UL Tx and DL Rx settings, i.e., the TCI-state for PDCCH and PDSCH, and spatialRelationlnfo for PUCCH and SRS, are decoupled in 3GPP Rel. 15 to allow for flexibility, i.e., independent signalling via RRC/MAC/PHY-layer must be performed to update the TCI-state and the spatialRelationlnfo for various DL and UL channels/RS resources.

Some embodiments herein therefore describe solutions for a joint update of the TCI state (UE Rx beam) for a PDSCH and the spatial relation information (UE Tx beam) for a PUCCH resource via a single TCI-state indication. The joint update of the UE's Tx beam and UE's Rx beam drastically reduces the signalling overhead and latency for the beam switching at the UE.

Additional problems that occur using the solutions of the prior art are also dealt with as will be described.

### SUMMARY

In view of the drawbacks disclosed earlier, there is provided a communication device or a radio device or a user equipment (UE) and a method performed by a UE according to anyone of claims 1-24.

There is also provided a UE comprising a processor and a memory, said memory containing instructions executable by said processor whereby said UE is operative to perform any one of the subject matter of method claims 1-24.

Several advantages are achieved by the embodiments herein, which include at least the following:
Reducing signalling overhead and latency for beam switching at the UE, which is achieved by the joint update solutions as will be described.

Facilitating faster beam switches, improve reliability of beam handovers and to exploit the scope of simultaneous DL and UL beam switching.

Another advantage is to provide a solution, while performing the joint update of Tx and RX settings that is applicable in both single-TRP and multi-TRP scenarios.

Additional advantages will be described and explained in detail in the description part of this disclosure.

### BRIEF DESCRIPTION OF THE DRAWINGS

Figures 1 illustrates the roles played by different layers in 3GPP Rel. 15 in the configuration and indication of TCI-states
Figure 2 illustrates a procedure of configuring TCI-states and indication of the same for scheduled PDSCH using DCI.
Figure 3 is a flowchart of a method performed by a UE according to embodiments herein.
Figure 4 is an exemplary block diagram depicting a UE according to exemplary embodiments herein.

### DETAILED DESCRIPTION

As mentioned earlier, some embodiments herein describe solutions for a joint update of the TCI state (UE Rx beam) for a PDSCH and the spatial relation information (UE Tx beam) for a PUCCH resource via a single TCI-state indication. The joint update of the UE's Tx beam and UE's Rx beam drastically reduces the signalling overhead and latency for the beam switching at the UE.

In most cases, when the UE is mobile, a switch in the direction of the DL beam means that the UL beam must also be switched. For UEs supporting the property of beam correspondence, the UE Rx beam used for the reception of a DL RS may automatically imply the UE Tx beam for the transmission of a PUCCH resource. Therefore, when a TCI-state with a DL RS with a QCL assumption of 'QCL-typeD' (spatial Rx filter) is applied to a CORESET or PDSCH, i.e., the UE's Rx beam is adjusted to receive the DL RS from a particular direction, the UE's Tx beam for the transmission of a PUCCH resource may be switched to the same direction. The current 3GPP Release 15 specification does not allow to simultaneously modify the UE's Rx beam and UE's Tx beam by a single physical layer-, RRC-, or MAC-CE-indication. It is important to mention that beam correspondence is a mandatory feature for UEs operating in FR2 in Rel. 15. Therefore, there is both scope and necessity for signalling a joint update of Tx and Rx beams at the UE, or Tx and Rx settings at the UE in general.

Therefore, to facilitate faster beam switches, improve reliability of beam handovers, and to exploit the scope for simultaneous DL and UL beam switching in similar directions for UEs satisfying beam correspondence, solutions to jointly update the Tx and Rx settings of a UE via RRC, MAC and PHY layer are provided in some embodiments herein.

In addition, the present disclosure, according to some embodiments, also deals with a related problem described below.

In 3GPP Rel. 15, the UE can communicate with a single transceiver point (TRP) or a radio base station or gNB. For Rel. 16 of 3GPP, the standardization body agreed to specify the transmission of a PDSCH and/or a PDCCH to the UE from multiple TRPs. It was further agreed in the 3GPP Radio Access Network (RAN1) working group 1 that a specific CORESET is associated with a TRP, i.e., the PDCCH(s) transmitted on a CORESET are transmitted from a specific TRP. There may be multiple CORESETs associated with one TRP and the number of CORESETs associated with each TRP need not be the same. For example, the UE may be configured with 4 CORESETs and the PDCCH(s) on the first three CORESETs may be transmitted from TRP1 and the PDCCH(s) on the remaining one CORESET may be transmitted from TRP2. In such a scenario, the TCI-state of the CORESET or the PDSCH is used to indirectly differentiate the association of the same with different TRPs. Multi-TRP transmission in the DL to the UE is performed in a transparent manner as the UE does not know if there is one TRP or multiple TRPs transmitting the PDSCHs/PDCCHs. However, a differentiation of TRPs is required in the UL to facilitate the transmission UL control information (HARQ ACKs/NACKs, SRs and CSI (Channel State Information)) to various TRPs is required. Depending on the type of multi-TRP communication to be enabled, the gNB, for example, may require the HARQ ACKs/NACKs for a particular PDSCH to be transmitted to the TRP from which the PDSCH was transmitted or they may all be collected in a single TRP. The same type of TRP differentiation is also required for PUCCH resources carrying SRs and CSI.

It is therefore required that the Tx and Rx settings at the UE be modified in a way that the PUCCH resources are transmitted to the intended TRP.

Hence, while performing the joint update of Tx and Rx settings, it is hereby also provided a solution that is applicable in both single-TRP and multi-TRP scenarios.

In the upcoming sections, the following solutions are provided to address the issues discussed earlier:
- Methods to jointly update the TCI-state of one or more CORESETs/PDSCHs along with one or more PUCCH resources via (Physical) PHY-layer, RRC or MAC-CE signalling by the gNB.
- Various possible grouping of PUCCH resources to update the spatialRelationlnfo for one or more groups of PUCCH resources to facilitate UL TRP differentiation in a multi-TRP scenario.
- UE behaviour in the application of the Tx and Rx settings on receiving them from the gNB or network node.

### Joint update of UE's Tx and Rx settings

### ∘ Joint update of TCI-state of PDSCH and PUCCH-SpatialRelationlnfo of one or more PUCCH resources via PHY-laver signalling

In accordance with an embodiment, the UE is configured to receive from the gNB, via the physical layer downlink control indicator (DCI), a TCI-state indication and a PUCCH-SpatialRelationlnfo indication. The TCI-state indicated by the DCI comprises quasi-co-location (QCL) assumptions to be derived from the antenna port(s) of the DL RS(s) for its application to the PDSCH scheduled by the DCI.

The application of the TCI-state to the PDSCH means that the UE shall assume that the DMRS ports of the PDSCH are quasi-co-located according to the QCL assumptions mentioned in the TCI-state parameter with the corresponding DL reference signals. For the reception/detection of the PDSCH scheduled by the DCI, the UE follows the QCL reference indicated by the indicated TCI state. The PUCCH-SpatialRelationInfo configuration indicated by the PUCCH-SpatialRelationlnfo indication in the DCI is applied to one or more PUCCH resource(s) configured for transmission in the UL.

The application of the PUCCH-SpatialRelationlnfo to a PUCCH resource means that for the transmission of a PUCCH resource, the corresponding Tx-beam setting (i.e., the spatial-filter) and the Tx-power setting used for transmitting the PUCCH resource are obtained from the PUCCH-SpatialRelationlnfo configuration. The Tx-beam setting of the PUCCH-SpatialRelationlnfo configuration indicates the spatial filter used either to receive a specific DL RS or to transmit a specific UL RS, where the specific DL or UL RS is a parameter of the PUCCH-SpatialRelationlnfo configuration and configured by higher layer (e.g., RRC).

In accordance with an embodiment, the PUCCH-SpatialRelationlnfo indicated in the DCI is applied by the UE either to the PUCCH resource indicated in the DCI by the PUCCH resource indicator, or to a group of PUCCH resources. The group of PUCCH resources may be either a group of PUCCH resources configured with the same CORESET ID as the CORESET on which the DCI is transmitted, or any PUCCH resource indicated by any DCI transmitted on the CORESET on which the DCI indicating the TCI-state is transmitted, or a group PUCCH resources configured with the same CORESET group ID as the CORESET on which the DCI is transmitted, or a group of PUCCH resources configured with the same PUCCH resource group ID as the PUCCH resource indicated by the PUCCH resource indicator in the DCI.

In accordance with an embodiment, the UE is configured to receive from the gNB via a higher layer (e.g., RRC) a set of TCI state parameter configurations, where each TCI-state parameter configuration comprises a unique TCI-state ID, the identifiers of one or more DL reference signals (CSI-RS, SSB or TRS) and a set of QCL assumptions for each DL reference signal. The QCL assumption(s) to be made from the DL RS(s) in the TCI-state may take one or more of the following values:
qcl-typeA, qcl-typeB, qcl-typeC, or qcl-typeD.

Out of the *N*₁ configured TCI-state parameter configurations, the gNB may configure the UE via MAC-CE message signaling, *M*₁ ≤ *N*₁ TCI states used for the TCI state indication in the DCI. The TCI-state indication in the DCI may be represented by a *n*₁ = ┌log₂*M*₁┐ bit indicator, and each codepoint of the TCI-state indication field in the DCI maps to a unique TCI-state parameter of the down-selected *M*₁ TCI-states. In an example, the gNB may configure *N*₁ = 128 TCI-state parameters, and by MAC-CE signalling, it down-selects *M*₁ = 8 TCI-state parameters. Therefore, the TCI-state indication field in the DCI may consists of *n*₁ = 3 bits.

In accordance with an embodiment, the UE is configured to receive from the gNB via a higher layer (e.g., RRC) a set of PUCCH-SpatialRelationlnfo parameter configurations, where each PUCCH-SpatialRelationlnfo parameter configuration comprises a unique PUCCH-SpatialRelationlnfo ID, a reference RS (which contains the ID of a CSI-RS, SSB or SRS resource), a pathloss RS and power control parameters to be used by the UE to determine the Tx beam (spatial filter) and Tx power for the transmission of a PUCCH resource, as shown in **Configuration 5** previously described.

Out of the *N*₂ configured PUCCH-SpatialRelationlnfo parameter configurations, the gNB may configure by MAC-CE message signaling *M*₂ *< N*₂ PUCCH-SpatialRelationlnfo parameters used for the PUCCH-SpatialRelationlnfo indication in the DCI. The PUCCH-SpatialRelationlnfo indication field in the DCI may be represented by a *n*₂ = ┌log₂*M*₂┐ bit indicator, and each codepoint of the PUCCH-SpatialRelationInfo indication field maps to a PUCCH-SpatialRelationlnfo parameter of the down-selected *M*₂ PUCCH-SpatialRelationlnfo parameters. In an example, the higher layer may configure *N*₂ = 64 PUCCH-SpatialRelationlnfo parameters and a MAC-CE signalling down-selects *M*₂ = 8 PUCCH-SpatialRelationlnfo parameters. Therefore, the PUCCH-SpatialRelationlnfo indication field in the DCI is of size *n*₂ = 3 bits.

When the gNB does not down-select via MAC-CE message signalling a set of PUCCH-SpatialRelationlnfo parameters used for the PUCCH-SpatialRelationlnfo indication in the DCI, the PUCCH-SpatialRelationlnfo indication field in the DCI may be represented by a *n*₂ = ┌log₂*N*₂┐ bit indicator, and each codepoint of the PUCCH-SpatialRelationlnfo indication field maps to one of the *N*₂ configured PUCCH-SpatialRelationlnfo parameters. In one example, the gNB may configure *N*₂ = 64 PUCCH-SpatialRelationlnfo parameters and there is no MAC-CE signalling for down-selection. Therefore, the PUCCH-SpatialRelationlnfo indication field in the DCI is of size *n*₂ = 6 bits.

Some exemplary embodiments above detail the indication of the TCI-state for a PDSCH and the indication of the PUCCH-SpatialRelationlnfo for one or more PUCCH resources via the DCI. Some of the following exemplary embodiments provides solutions to control the size of the PUCCH-SpatialRelationlnfo bit indicator in the DCI.

In accordance with an embodiment, the UE is configured to receive a PUCCH-SpatialRelationInfo size-indicator from the gNB via a higher layer (e.g., MAC, RRC) that indicates whether the PUCCH-SpatialRelationlnfo indication field in the DCI is of size 0 bits (hence not present) or of size *n*₂ bits. In one example, the PUCCH-SpatialRelationInfo size-indicator may be represented by an RRC parameter. If this RRC parameter is set to 'enabled', the PUCCH-SpatialRelationlnfo indication field in the DCI is of size *n*₂ bits. If the RRC parameter is not configured or set to 'disabled', the PUCCH-SpatialRelationlnfo indication field in the DCI is of size 0 bits (hence not present). In another example, the PUCCH-SpatialRelationlnfo size-indicator may be configured via a MAC-CE message. The higher-layer indication of the size of the PUCCH-SpatialRelationlnfo indication field in the DCI may be helpful in low-mobility scenarios where the gNB can switch between PUCCH-SpatialRelationlnfo indication via the DCI (i.e., via the physical layer) or the higher layer (to reduce the DCI overhead).

The next set of some exemplary embodiments provide ways to indicate to the UE which groups of PUCCH resources are updated with the PUCCH-SpatialRelationlnfo value indicated in the DCI.

In accordance with an embodiment, the UE is configured to receive a PUCCH-SpatialRelationInfo-application indicator from the gNB via physical layer or a higher layer (e.g., RRC, MAC), the PUCCH-SpatialRelationlnfo-application indicator indicates whether the PUCCH-SpatialRelationlnfo indicated in the DCI is applied by the UE to the PUCCH resource indicated by the PUCCH resource indicator in the DCI, or to a group of PUCCH resources. The group of PUCCH resources may be either a group of PUCCH resources configured with the same CORESET ID as the CORESET on which the DCI is transmitted, or any PUCCH resource indicated by any DCI transmitted on the CORESET on which the DCI indicating the TCI-state is transmitted, or a group PUCCH resources configured with the same CORESET group ID as the CORESET on which the DCI is transmitted, or a group of PUCCH resources configured with the same PUCCH resource group ID as the PUCCH resource indicated by the PUCCH resource indicator in the DCI.

In an example, the PUCCH-SpatialRelationlnfo-application indicator is represented by an RRC parameter. If the value of the RRC parameter is set to 'disabled', or not configured, the PUCCH-SpatialRelationlnfo indicated in the DCI is applied by the UE to the PUCCH resource indicated by PUCCH resource indicator the in the DCI. If the RRC parameter is set to 'enabled', the PUCCH-SpatialRelationlnfo indicated in the DCI is applied by the UE to a group of PUCCH resources as mentioned above.

In another example, the PUCCH-SpatialRelationlnfo-application indicator is represented by an *x*-sized bit-field in a DCI or in a MAC-CE message. If the field is set to codepoint *p*₀, the PUCCH-SpatialRelationlnfo indicated in the DCI is applied by the UE to the PUCCH resource indicated in the DCI. If the field is set to codepoint *p*₁, the PUCCH-SpatialRelationlnfo indicated in the DCI is applied by the UE to one of the groups of PUCCH resources mentioned above.

The indicator in the above exemplary embodiment has a variable size, if configured, depending on the size of the PUCCH-SpatialRelationlnfo indication field in the DCI, as the field would be unused when the PUCCH-SpatialRelationlnfo indication field in the DCI is not present.

In accordance with an embodiment, the PUCCH-SpatialRelationlnfo-application indication received by the UE from the gNB via physical layer has either a size of *y* bits (hence present) or 0 bit (hence not present). When the PUCCH-SpatialRelationlnfo indication field is not present in the DCI, the PUCCH-SpatialRelationInfo-application indicator is not present. When PUCCH-SpatialRelationlnfo indication field in the DCI is of size *n*₂ bits, the PUCCH-SpatialRelationInfo-application bit indicator is of size y bits.

In accordance with an embodiment, the UE is configured to receive a PUCCH-SpatialRelationlnfo functionality indicator that combines the functions of the PUCCH-SpatialRelationlnfo size-indicator and the PUCCH-SpatialRelationlnfo application indicator. In one example, the PUCCH-SpatialRelationlnfo functionality indicator is configured as an *x*-bit field in the DCI or an *x*-bit field in a MAC-CE message. If the field is set to codepoint *p*₀, the PUCCH-SpatialRelationlnfo indication field in the DCI is of size 0 bits. If the field is set to codepoint *p*₁, the PUCCH-SpatialRelationlnfo indication field in the DCI is of size *n*₂ bits and the PUCCH-SpatialRelationlnfo indicated in the DCI is applied by the UE to the PUCCH resource explicitly indicated in the DCI.

If the field is set to codepoint *p*₂, the PUCCH-SpatialRelationlnfo indication field in the DCI is of size *n*₂ bits and the PUCCH-SpatialRelationlnfo indicated by the DCI is applied by the UE to one of the groups of PUCCH resources mentioned in the embodiments above.

In another example, the PUCCH-SpatialRelationlnfo functionality indicator is configured as an RRC parameter and the different indications provided by the code points *p*₀, *p*₁ and *p*₂ in the previous example (the PUCCH-SpatialRelationlnfo functionality indicator configured as a field in the DCI/MAC-CE message) may be provided by the RRC parameter by configuring different values for the same.

### ∘ Joint update of TCI-state of CORESET(s) and PUCCH-SpatialRelationInfo of one or more PUCCH resources

The previous sub-section details the joint update of TCI-state and UL spatialRelationlnfo via the PHY-layer. In 3GPP Rel. 15, the gNB updates the TCI-state for CORESETs and PUCCH-SpatialRelationlnfo for PUCCH resources via MAC-CE signalling. Different MAC-CE messages are used to update the TCI-state of a CORESET and the PUCCH-SpatialReationlnfo of a PUCCH resource. The MAC-CE message to update the TCI-state of a CORESET contains a serving cell ID, a CORESET ID and a TCI-state ID. To update the spatialRelationlnfo of a PUCCH resource, the gNB sends a MAC-CE message to the UE with a serving cell ID, an UL BWP ID, a PUCCH resource ID and a bitmap whose length is the same as the number of PUCCH-SpatialRelationlnfo parameters configured by the gNB via the RRC. In this subsection, methods to jointly update the TCI-state of one or more CORESETs and the PUCCH-SpatialRelationlnfo of one or more PUCCH resources via a single MAC-CE message is provided to address the issues mentioned in section 2. This improves beam switching latency and beam handover reliability at the UE. While PHY-layer update might be the fastest way to update, issues such as DCI overhead, lack of support for PHY-layer-based Tx and Rx settings update for DL and UL control channels at the UE in 3GPP Rel. 15 make the MAC-layer-based update a more attractive option.

In accordance with an embodiment, the UE is configured to receive a MAC-CE message from the gNB containing at least a serving-cell ID, a CORESET ID, a TCI-state ID and a PUCCH-SpatialRelationlnfo ID. When the UE receives the MAC-CE message, the UE applies the indicated TCI-state to the indicated CORESET and the indicated PUCCH-SpatialRelationlnfo to one of the following groups of PUCCH resources: the group of PUCCH resources configured with the indicated CORESET ID, any PUCCH resource indicated by the PUCCH resource indicator field in a DCI transmitted in the CORESET indicated by the CORESET ID. The application of the TCI-state to a CORESET means that the UE shall assume that the DMRS ports of the PDCCH(s) transmitted in the CORESET are quasi-co-located according to the QCL assumptions mentioned in the TCI-state parameter with the antenna ports of the corresponding DL reference signals. For the reception/detection of the PDCCH(s) transmitted in the CORESET, the UE follows the QCL references indicated by the indicated TCI state. The application of the PUCCH-SpatialRelationlnfo to a PUCCH resource means that for the transmission of a PUCCH resource, the corresponding Tx-beam setting (i.e., the spatial-filter) and the Tx-power setting used for transmitting the PUCCH resource are obtained from the PUCCH-SpatialRelationlnfo configuration. The Tx-beam setting of the PUCCH-SpatialRelationInfo configuration indicates the spatial filter used either to receive a specific DL RS or to transmit a specific UL RS, where the specific DL or UL RS is a parameter of the PUCCH-SpatialRelationlnfo configuration and configured by higher layer (e.g., RRC).

In accordance with an embodiment, the UE is configured to receive a MAC-CE message from the gNB containing at least a serving-cell ID, a CORESET group ID, a TCI-state ID and a PUCCH-SpatialRelationlnfo ID. When the UE receives the MAC-CE message, the UE applies the indicated TCI-state to CORESETs that are configured with the CORESET group indicated by the CORESET group ID, and the indicated PUCCH-SpatialRelationlnfo to either the group of PUCCH resources configured with the indicated CORESET group ID or any PUCCH resource indicated by the PUCCH resource indicator field in a DCI transmitted in any of the CORESETs configured with the indicated CORESET group ID.

In accordance with an embodiment, the UE is configured to receive a MAC-CE message from the gNB containing at least a serving-cell ID, a CORESET or a CORESET group ID, a TCI-state ID, a PUCCH resource group ID and a PUCCH-SpatialRelationlnfo ID. When the UE receives the MAC-CE message, the UE applies the indicated TCI-state to the CORESET or the CORESET(s) that are configured with the CORESET group indicated in the MAC-CE message, and the indicated PUCCH-SpatialRelationlnfo to either the group of PUCCH resources configured with the indicated CORESET group ID or any PUCCH resource indicated by the PUCCH resource indicator field in a DCI transmitted in the CORESET indicated by the CORESET ID or CORESETs configured with the indicated CORESET group ID.

In accordance with an embodiment, if the UE receives a MAC-CE message containing at least a serving-cell ID, a CORESET ID or a CORESET group ID, a TCI-state ID, a PUCCH-SpatialRelationlnfo ID and a BWP ID indicating an UL BWP, or a MAC-CE message containing at least a serving cell ID, a CORESET ID or a CORESET group ID, a TCI-state ID, a PUCCH-SpatialRelationlnfo ID, a PUCCH resource group ID and a BWP ID indicating an UL BWP, the UE applies the indicated TCI-state to the intended CORESET(s) and the indicated PUCCH-SpatialRelationlnfo to the intended PUCCH resources that are configured in the UL BWP indicated by the BWP ID.In 3GPP Rel. 15, as discussed earlier, separate MAC-CE messages exist for the update of TCI-state of a CORESET and for the update of the PUCCH-SpatialRelationlnfo of a PUCCH resource. The MAC-CE message described in the previous embodiments can be described as an extension of the MAC-CE message that updates the TCI-state of a CORESET.

In accordance with an embodiment, the UE is configured to receive from the gNB a MAC-CE message containing at least a serving cell ID, a CORESET ID or a CORESET group ID, a TCI-state ID and optionally, an octet containing a PUCCH-SpatialRelationlnfo ID. The MAC-CE message contains an x-bit indicator in one of the octets before the octet that is supposed to contain the PUCCH-SpatialRelationlnfo ID to indicate if the octet containing the PUCCH-SpatialRelationlnfo ID is present in the MAC-CE message or not. For example, if the indicator is set to codepoint *p*₀, the octet containing the PUCCH-SpatialRelationlnfo ID is not present in the MAC-CE message. If the indicator is set to codepoint *p*_{1,} the octet containing the PUCCH-SpatialRelationlnfo ID is present in the MAC-CE message.

In accordance with an embodiment, the UE is configured to receive from the gNB a MAC-CE message containing at least a serving cell ID, a CORESET ID or a CORESET group ID, a TCI-state ID and optionally, an a PUCCH resource group ID and a PUCCH-SpatialRelationlnfo ID that may be contained in one or two octets. The MAC-CE message contains an x-bit indicator in one of the octets before the octet(s) that is supposed to contain the PUCCH resource group ID and the PUCCH-SpatialRelationlnfo ID to indicate if the octet(s) containing the PUCCH resource group ID and the PUCCH-SpatialRelationlnfo ID is/are present in the MAC-CE message or not. For example, if the indicator is set to codepoint *p*₀, the octet(s) containing the PUCCH resource group ID and the PUCCH-SpatialRelationlnfo ID is/are not present in the MAC-CE message. If the indicator is set to codepoint *p*₁, the octet(s) containing the PUCCH resource group ID and the PUCCH-SpatialRelationlnfo ID is/are present in the MAC-CE message.

The next embodiment is also an extension of a 3GPP Rel. 15 UE behaviour that states that the application of the settings conveyed by the MAC-CE should be performed in the same slot.

In accordance with an embodiment, if the UE receives a MAC-CE message containing at least a serving-cell ID, a CORESET ID or a CORESET group ID, a TCI-state ID and a PUCCH-SpatialRelationlnfo ID, or a MAC-CE message containing at least a serving cell ID, a CORESET ID or a CORESET group ID, a TCI-state ID, a PUCCH resource group ID and a PUCCH-SpatialRelationlnfo ID, the UE applies the indicated TCI-state to the intended CORESET(s) and the indicated PUCCH-SpatialRelationlnfo to the intended PUCCH resources in the same slot after the reception of the MAC-CE.

### ∘ Joint update of TCI-state of CORESET(s)/PDSCH and PUCCH-SpatialRelationlnfo of one or more PUCCH resources via RRC configuration

For UEs supporting the property of beam correspondence, the UE Rx beam used for the reception of a DL RS may automatically imply the UE Tx beam for the transmission of a PUCCH resource. Therefore, when a TCI-state with a DL RS with a QCL assumption of 'QCL-typeD' (spatial Rx filter) is applied to a CORESET or PDSCH, i.e., the UE's Rx beam is adjusted to receive the DL RS from a particular direction, the UE's Tx beam for the transmission of a PUCCH resource may be switched to the same direction. The current 3GPP Release 15 specification does not allow to simultaneously modify the UE's Rx beam and UE's Tx beam by a single physical layer-, RRC-, or MAC-CE-indication. The following embodiments therefore describe solutions for a joint update of the TCI state (UE Rx beam) for a PDSCH and the spatial relation information (UE Tx beam) for a PUCCH resource via a single TCI-state indication. The joint update of the UE's Tx beam and UE's Rx beam drastically reduces the signalling overhead and latency for the beam switching at the UE.

In accordance with embodiments, the UE is configured with a TCI state parameter configuration, the TCI parameter configuration comprising at least a TCI state identifier, one or more identifier(s) of DL RSs (e.g, a CSI-RS, TRS or SSB) along with a set of QCL assumptions mentioned for each DL RS and one or more PUCCH-SpatialRelationlnfo ID(s) (as shown below in **Configuration 6**). Each PUCCH-SpatialRelationlnfo ID may be defined by the RRC-parameter *'associatedPUCCH-SpatialRelationInfo'.* When the UE receives the DCI, carried by a PDCCH, that contains a TCI-state indication field for PDSCH scheduled by the DCI and a PUCCH-resource indication field, and if the value in the TCI-state indication field maps to a TCI state that contains one or more PUCCH-SpatialRelationlnfo ID(s), then the UE updates the PUCCH-SpatialRelationlnfo(s) indicated by the IDs in *associatedPUCCH-SpatialRelationInfo*(s) in the TCI-state for the PUCCH resource indicated by the PUCCH-resource indicator. For the transmission of the PUCCH resource indicated in the DCI, the UE applies the Tx-beam setting (spatial filter) and Tx-power setting indicated by the PUCCH-SpatialRelationlnfo(s) in the TCI state for the transmission of the PUCCH resource. Moreover, the UE updates the TCI state for the PDSCH scheduled by the DCI. In this way, the UE follows the QCL assumption (Rx beam) for the reception of the upcoming PDSCH scheduled in the DCI.

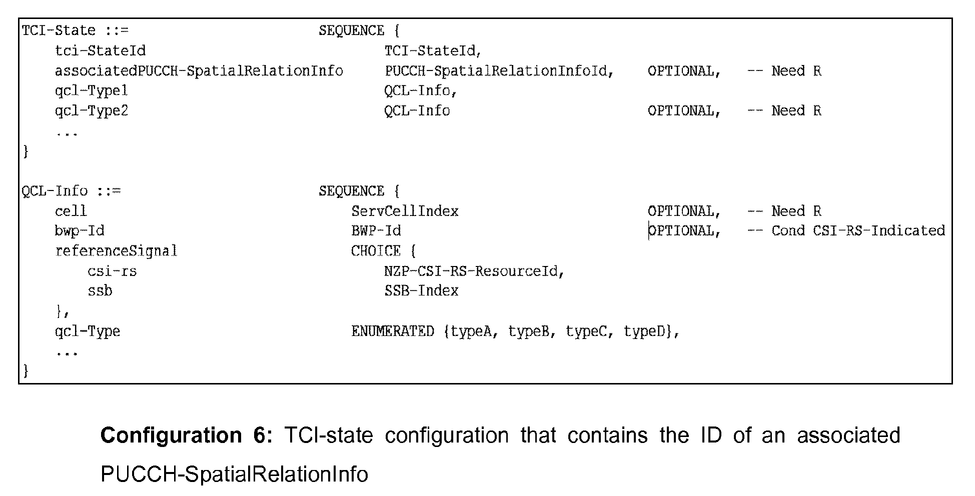

### ∘ UE behaviour in the application of the Tx and Rx settings on receiving them from the gNB or network node.

The next set of some exemplary embodiments describe the UE behaviour on reception of a MAC-CE indicating the TCI-state configured with a PUCCH-SpatialRelationlnfo ID.

In accordance with an embodiment, the UE is configured to receive a MAC-CE message from the gNB, the MAC-CE message contains at least a serving cell ID, a CORESET ID and a TCI-state ID that indicates a TCI-state configured with a PUCCH-SpatialRelationlnfo ID. When the UE receives the MAC-CE message, the UE applies the QCL assumption(s) defined for each of the DL RS(s) in the TCI-state parameter configuration to the DMRS ports of the PDCCH(s) transmitted in the CORESET indicated by the CORESET ID, and the PUCCH-SpatialRelationlnfo indicated by the PUCCH-SpatialRelationlnfo ID in the TCI-state to one of the following PUCCH resources:
- the group of PUCCH resources configured with the indicated CORESET ID,
- any PUCCH resource indicated by the PUCCH resource indicator field in a DCI transmitted on the CORESET indicated by the CORESET ID.

In accordance with an embodiment, the UE is configured to receive a MAC-CE message from the gNB, the MAC-CE message contains at least a serving cell ID, a CORESET group ID and a TCI-state ID that indicates a TCI-state. The TCI-state is configured with a PUCCH-SpatialRelationlnfo ID. When the UE receives the MAC-CE message, the UE applies the QCL assumption(s) defined for each of the DL RS(s) in the TCI-state parameter configuration to the DMRS ports of the PDCCH(s) transmitted in the CORESETs that are configured with the CORESET group indicated by the CORESET group ID, and the PUCCH-SpatialRelationlnfo indicated by the PUCCH-SpatialRelationlnfo ID in the TCI-state to one of the following PUCCH resources:
- the group of PUCCH resources configured with the indicated CORESET group ID,
- any PUCCH resource indicated by the PUCCH resource indicator field in a DCI transmitted on any of the CORESETs configured with the indicated CORESET group ID.

In accordance with an embodiment, the UE is configured to receive a MAC-CE message from the gNB, the MAC-CE message contains at least a serving cell ID, a CORESET ID or a CORESET group ID, a PUCCH resource group ID and a TCI-state ID that indicates a TCI-state configured with a PUCCH-SpatialRelationlnfo ID. When the UE receives the MAC-CE message, the UE applies the QCL assumption(s) defined for each of the DL RS(s) in the TCI-state parameter configuration to the DMRS ports of the PDCCH(s) transmitted in the CORESET/the CORESET(s) that are configured with the CORESET group indicated in the MAC-CE message, and the PUCCH-SpatialRelationlnfo indicated by the PUCCH-SpatialRelationlnfo ID in the TCI-state to the group of PUCCH resources configured with the indicated PUCCH resource group ID.

In accordance with an embodiment, if the UE receives a MAC-CE message containing at least a serving-cell ID, a CORESET ID or a CORESET group ID, a TCI-state ID that indicates a TCI-state configured with a PUCCH-SpatialRelationlnfo ID and a BWP ID indicating an UL BWP, or a MAC-CE message containing at least a serving cell ID, a CORESET ID or a CORESET group ID, a TCI-state ID that indicates a TCI-state configured with a PUCCH-SpatialRelationlnfo ID, a PUCCH resource group ID and a BWP ID indicating an UL BWP, the UE applies the indicated TCI-state to the intended CORESET(s) and the PUCCH-SpatialRelationlnfo indicated in the TCI-state configuration to the intended PUCCH resources that are configured in the UL BWP indicated by the BWP ID.

In accordance with an embodiment, if the UE receives a MAC-CE message containing at least a serving-cell ID, a CORESET ID or a CORESET group ID and a TCI-state ID that indicates a TCI-state configured with a PUCCH-SpatialRelationlnfo ID, or a MAC-CE message containing at least a serving cell ID, a CORESET ID or a CORESET group ID, a TCI-state ID that indicates a TCI-state configured with a PUCCH-SpatialRelationlnfo ID and a PUCCH resource group ID, the UE applies the indicated TCI-state to the intended CORESET(s) and the PUCCH-SpatialRelationlnfo indicated in the TCI-state configuration to the intended PUCCH resources in the same slot after the reception of the MAC-CE.

The next set of some exemplary embodiment describe the UE behaviour when it receives a DCI with a TCI-state indication configured with a PUCCH-SpatialRelationlnfo ID.

In accordance with an embodiment, the UE is configured to receive a DCI from the gNB that contains a TCI-state indication field that maps to a TCI-state configured with a PUCCH-SpatialRelationlnfo ID. When the UE receives the DCI, it applies the QCL assumption(s) mentioned for each of the DL RS(s) in the TCI-state to the DMRS ports of the PDSCH scheduled by the DCI, and the PUCCH-SpatialRelationlnfo indicated in the TCI-state to either the PUCCH resource indicated in the DCI by the PUCCH resource indicator field, or to any PUCCH resource indicated by a DCI transmitted on a specific CORESET, or a group of PUCCH resources configured with a specific CORESET ID, CORESET group ID or a PUCCH resource group ID. The group of PUCCH resources may be configured with the same CORESET ID as the CORESET on which the DCI is transmitted, or configured with the same CORESET group ID as the CORESET on which the DCI is transmitted, or configured with the same PUCCH resource group ID as the PUCCH resource indicated by the PUCCH resource indicator in the DCI.

As there are multiple groups of PUCCH resources that can be applied with the PUCCH-SpatialRelationlnfo indicated in the TCI-state, a flag may be introduced to indicate to the UE which group of PUCCH resources the PUCCH-SpatialRelationlnfo is to be applied with.

In accordance with an embodiment, the UE is configured to receive a PUCCH-SpatialRelationlnfo application indicator via the physical layer or a higher layer (e.g., MAC, RRC). It indicates whether the PUCCH-SpatialRelationlnfo indicated in the TCI-state that is indicated by a DCI should be applied by the UE only to the PUCCH resource indicated by the PUCCH resource indicator in the DCI, or to one of the following PUCCH resources: any PUCCH resource indicated by a DCI transmitted on a specific CORESET, or a group of PUCCH resources configured with a specific CORESET ID, CORESET group ID or a PUCCH resource group ID as mentioned in the previous embodiment.

In an example, the PUCCH-SpatialRelationlnfo application indicator is received as an x-bit field in the DCI or a MAC-CE message. On reception of the field with a value set to codepoint *p*₀, the UE applies the PUCCH-SpatialRelationlnfo indicated in the TCI-state to the PUCCH resource indicated in the DCI by the PUCCH resource indicator field.

On reception of the field with a value set to codepoint *p*₁, the UE applies the PUCCH-SpatialRelationlnfo indicated in the TCI-state to either a group of PUCCH resources configured with the same CORESET ID as the CORESET on which the DCI is transmitted, or any PUCCH resource that is indicated by the PUCCH resource indicator field in any DCI transmitted by the gNB on the same CORESET as the one in which the DCI containing the TCI-state indication is transmitted, or a group PUCCH resources configured with the same CORESET group ID as the CORESET on which the DCI is transmitted, or a group of PUCCH resources configured with the same PUCCH resource group ID as the PUCCH resource indicated by the PUCCH resource indicator in the DCI.

In another example, the PUCCH-SpatialRelationlnfo application indicator is configured as an RRC parameter and the different indications provided by the codepoints *p*₀ and *p*₁ in the previous example (the PUCCH-SpatialRelationlnfo application indicator configured as an x-bit field in the DCI or a MAC-CE message) may be provided by the RRC parameter by configuring different values for the same.

### Grouping of PUCCH resources to facilitate transmission to multiple TRPs by the UE in the UL

As previously described there is a need to facilitate the joint update of UE's Tx and Rx settings to receive DL channels and transmit UL channels respectively, while considering both single-TRP and multi-TRP scenarios.

In this subsection, solutions to group PUCCH resources according to a CORESET, a CORESET group, or an explicitly defined PUCCH resource group ID/TRP ID are provided.

The first two solutions involve distinguishing both DL and UL control channel resources according to the TRPs they are transmitted from in the DL or the TRPs they are transmitted to in the UL. The CORESET ID or a CORESET group ID is used for this purpose. As discussed earlier, a CORESET configured for the transmission of PDCCH by the gNB can be associated with only one TRP, i.e., the PDCCH(s) transmitted on the CORESET come from a single TRP.

A UE may be configured with multiple CORESETs, with the PDCCH(s) on the CORESETs coming from a specific TRP. Therefore, using the ID of a CORESET or an identifier that groups CORESETs according to the TRP can be used to group PUCCH resources that have to be transmitted to different TRPs. Such solutions result in a one-to-one mapping between one or a group of DL control channel resources (CORESETs) and one or a group of UL control channel resources (PUCCH resources). They result in, segregating both DL and UL control channel resources explicitly for the UE according to an associated TRP or any other criterion decided by the gNB.

In a further solution, a grouping of PUCCH resources devoid of any related grouping of DL control channel resources (CORESETs) is provided. Here, the segregation of the UL control channel resources is decoupled from the DL control channel resources. This solution provides flexibility for asymmetric multi-TRP transmissions, where the DL channel may be transmitted from n TRPs, but the UL transmission have to be performed to *m* ≤ *n* TRPs.

Along with the PUCCH resource grouping methods, the MAC-CE signalling involved to update the Tx settings (i.e., the PUCCH-SpatialRelationlnfo settings) of a particular group of PUCCH resources is provided in the following embodiments.

### ∘ Grouping of PUCCH resources based on CORESETs

The PUCCH resources may be grouped according to an individual CORESET they are associated with. The proposed grouping scheme allows for a joint update of UE's Rx beam settings for the reception of the PDCCH(s) transmitted on a CORESET and the Tx beam settings for the transmission of one or more PUCCH resources using a CORESET ID. It is also useful in the case of multi-TRP deployments, as each CORESET is associated with a specific TRP. The details of the grouping and associated signalling are provided in the embodiments below.

In accordance with an embodiment, the UE is configured to receive from the gNB via a higher layer (e.g., RRC), a PUCCH resource configuration associated with a CORESET that comprises at least the following parameters (shown in **Configuration 7** below): a CORESET ID, 'associatedCORESET', indicating the associated CORESET for the PUCCH resource, a unique PUCCH resource identifier (ID), the parameters 'startingPRB', 'secondHopPRB' and 'intraSlotFrequencyHopping' that provide a frequency hopping setting for the PUCCH resource, and a parameter 'format' that specifies the format of the PUCCH resource. The parameter 'format' may either take the value 'PUCCH-format0', PUCCH-format1', 'PUCCH-format2', 'PUCCH-format3' or 'PUCCH-format4'. Each PUCCH format specifies the PUCCH transmission with a subset of the following settings: initial cyclic shift, number of symbols for a PUCCH transmission, starting symbol index, time domain orthogonal cover code (OCC), OCC-index and OCC-length.

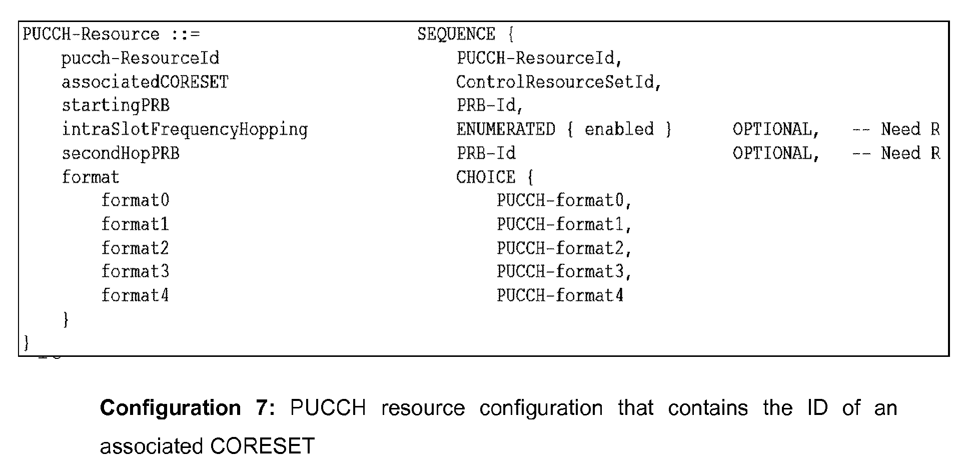

In accordance with an embodiment, the DCI comprises a PUCCH resource indicator field, whose codepoints map only to PUCCH resources configured with the CORESET ID of the CORESET on which the DCI is transmitted.

The proposed PUCCCH-resource grouping method can be used to update a PUCCH-SpatialRelationlnfo for a group of PUCCH resources via a single instance of MAC-CE signalling, as explained in the following embodiment.

In accordance with an embodiment, the UE is configured to receive from the gNB a MAC-CE message, the MAC-CE message containing at least the following parameters: a CORESET ID, a PUCCH-SpatialRelationlnfo ID, and optionally a BWP ID indicating a specific UL BWP and/or a serving cell ID indicating a configured cell for the UE.

When the UE receives the MAC-CE message, the PUCCH-SpatialRelationlnfo, indicated by the PUCCH-SpatialRelationlnfo ID, is applied by the UE to all PUCCH resources that are configured with the CORESET ID indicated in the MAC-CE message.

If a BWP ID is contained in the MAC-CE message, the UE applies the PUCCH-SpatialRelationlnfo only to the PUCCH resource(s) configured with the CORESET ID in the uplink BWP indicated by the BWP ID. The application of the PUCCH-SpatialRelationlnfo to a PUCCH resource means that for an uplink transmission of a PUCCH resource, the corresponding Tx-beam setting (i.e., the spatial-filter) and the Tx-power setting used for transmitting the PUCCH resource are obtained from the PUCCH-SpatialRelationlnfo configuration indicated by the PUCCH-SpatialRelationlnfo ID. The Tx-beam setting indicates a spatial filter, which is used either to receive a specific DL RS, or to transmit a specific UL RS, where the specific DL RS or UL RS is configured by higher layer (e.g., RRC). The serving cell ID in the MAC-CE message indicates the ID of the cell for which the MAC-CE applies.

### ∘ Grouping of PUCCH resources based on CORESET groups

The following exemplary embodiments describe a grouping of PUCCH resources according to a CORESET group they are associated with. The specific grouping may depend on the gNB implementation. In one example, the CORESETs in a group may be associated with the same TRP, and the CORESET group ID may then be associated with this TRP. The CORESET group ID can be used in a PUCCH resource configuration to group PUCCH resources for UL TRP differentiation.

A grouping of PUCCH resources reduces MAC-CE signalling overhead since the TCI-state and the PUCCH-SpatialRelationlnfo associated with PUCCH resources of the same CORESET can be updated in a single MAC-CE signalling occasion. The following embodiments provide the details for the higher layer configuration of the proposed grouping method.

In accordance with an embodiment, the UE is configured to receive from the gNB a higher layer (e.g., RRC) configuration of a ControlResourceSet (CORESET) associated with a CORESET group that comprises at least the following parameters (shown in **Configuration 8**): a CORESET group ID, 'CORESETgroupld', indicating the associated CORESET group of the CORESET, a CORESET ID which is unique for each CORESET configuration, the parameters frequencyDomainResources and duration indicating the time-frequency resources for the CORESET configuration, a parameter 'cce-REG-MappingType' indicating the mapping configuration of the control channel element to the resource element group, a precoder granularity configuration, a 'tci-PresentlnDCI' parameter indicating if the TCI-state for a PDSCH is indicated in the DCI, a PDCCH DMRS scrambling ID, and a list of PDCCH TCI-states to add and release.

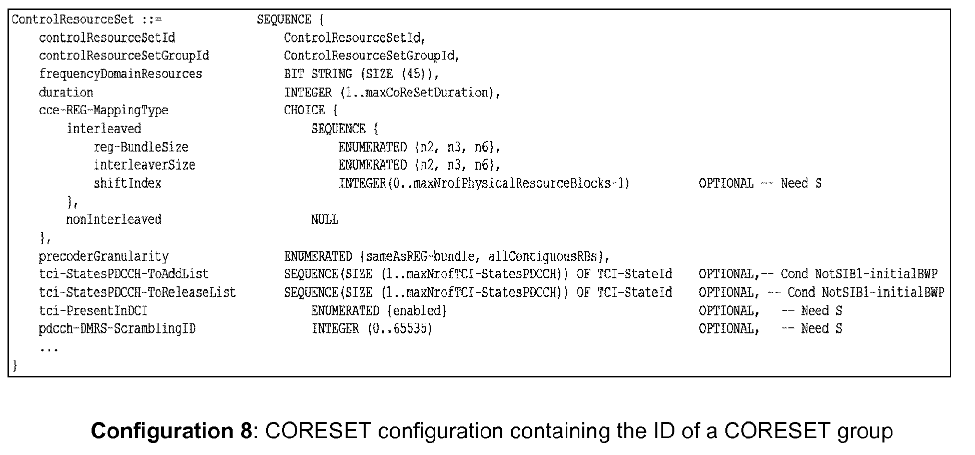

In accordance with an embodiments, the UE is configured to receive from the gNB a higher layer (e.g., RRC) PUCCH resource configuration associated with a CORESET group that comprises at least the following parameters (shown in **Configuration 9** below): the CORESET group ID, 'associatedCORESETgroup', indicating the associated CORESET group of the PUCCH resource, a PUCCH resource ID which is unique for each PUCCH resource configuration, the parameters 'startingPRB', 'secondHopPRB' and 'intraSlotFrequencyHopping' that provide a frequency hopping setting for the PUCCH resource, and a parameter 'format' which specifies the format of the PUCCH resource.

The parameter 'format' may take either the value 'PUCCH-format0', PUCCH-format1', 'PUCCH-format2', 'PUCCH-format3' or 'PUCCH-format4'. Each PUCCH format specifies the PUCCH transmission with a subset of the following settings: initial cyclic shift, number of symbols for a PUCCH transmission, starting symbol index, time domain orthogonal cover code (OCC), OCC-index and OCC-length.

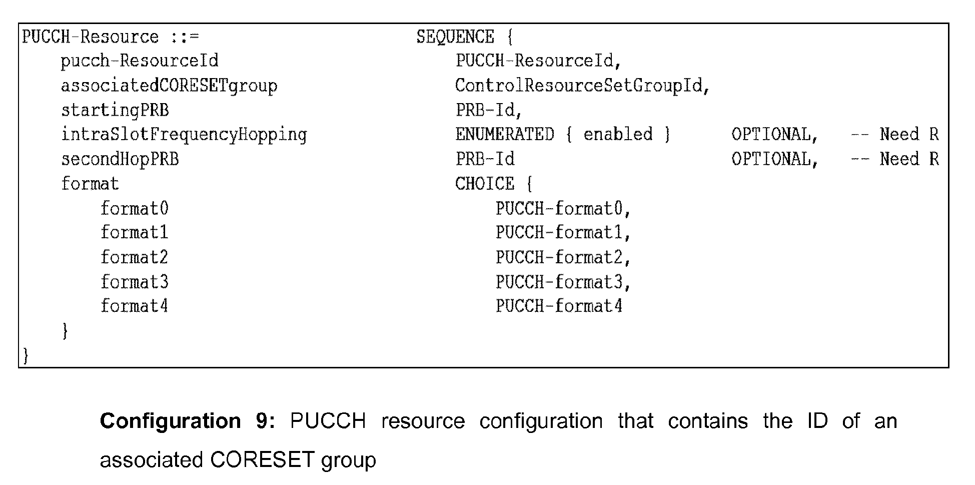

In accordance with an embodiment, the DCI comprises a PUCCH resource indicator field, whose codepoints map only to PUCCH resources configured with the CORESET group ID of the CORESET on which the DCI is transmitted.

The proposed PUCCCH resource grouping may be used to update the PUCCH-SpatialRelationlnfo for a group of PUCCH resources via a single instance of MAC-CE signalling, as provided by the following embodiment.

In accordance with an embodiment, the UE is configured to receive from the gNB a MAC-CE message, the MAC-CE message containing at least the following parameters: a CORESET group ID, a PUCCH-SpatialRelationlnfo ID, and optionally a BWP ID indicating a specific UL BWP and/or a serving cell ID indicating a configured cell for the UE.

When the UE receives the MAC-CE message, the PUCCH-SpatialRelationlnfo indicated by the PUCCH-SpatialRelationlnfo ID is applied by the UE to all PUCCH resources that are configured with the CORESET group ID indicated in the MAC-CE message. If a BWP ID is contained in the MAC-CE message, the UE applies the PUCCH-SpatialRelationlnfo only to the PUCCH resource(s) configured with the CORESET group ID in the uplink BWP indicated by the BWP ID.

In addition to updating the PUCCH-SpatialRelationlnfo for a group of PUCCH resources, the proposed CORESET-grouping scheme can be used to update the TCI-state for a CORESET group, as explained by the following embodiment.

In accordance with an embodiments, the UE is configured to receive from the gNB a MAC-CE message, the MAC-CE message containing at least the following parameters: a serving cell ID, a CORESET group ID and a TCI-state ID. When the UE receives the MAC-CE message, the UE applies the TCI-state indicated by the TCI-state ID to the CORESET(s) configured with the CORESET group ID indicated in the MAC-CE message. The serving cell ID in the MAC-CE message indicates the ID of the cell for which the MAC-CE applies.

### ∘ Grouping of PUCCH resources based on an ID independent of CORESETs

With the solutions described earlier, the explicit separation of PUCCH resources according to PDCCH transmission in a CORESET in the DL.

With this type of separation, the UL transmissions can be made to follow the DL PDCCH(s) received from a CORESET or a CORESET group. For example, if four CORESETs are configured for a UE, where CORESETs 1 and 2 are associated with TRP 1 and CORESETs 3 and 4 are associated with TRP 2, the configured PUCCH resources may be grouped and either transmitted to TRP 1 or TRP 2.

Therefore, there exist as many groups of PUCCH resources as there are TRPs or groups of CORESETs. The DCIs transmitted on each CORESET require one or more PUCCH resources to indicate HARQ ACK/NACK transmission for the PDSCHs scheduled by the DCI and hence each CORESET group must be allocated one or more PUCCH resources.

An asymmetric grouping in the DL and UL may therefore not be possible with the above embodiments, i.e., the number of groups of CORESETs and PUCCH resources has to be identical in the above embodiments which means that if the gNB wants to enable a multi-TRP communication in which the CORESETs configured for the UE are transmitted from n TRPs and the PUCCH resources in the UL have to be transmitted to m TRPs, with *m* ≤ *n,* such a configuration may not be possible.

Therefore, a grouping of PUCCH resources that is independent of association with the CORESETs in the DL transmission is provided in the following embodiments.

In accordance with an embodiment, the UE is configured to receive from the gNB a higher layer (e.g., RRC) PUCCH resource configuration associated with a PUCCH resource group that comprises at least the following parameters (shown in **Configuration 10**): a PUCCH resource group ID, 'PUCCH-ResourceGroupID', indicating the associated PUCCH resource group of the PUCCH resource, a PUCCH resource ID which is unique for each PUCCH resource configuration, the parameters 'startingPRB', 'secondHopPRB' and 'intraSlotFrequencyHopping' that provide a frequency hopping setting for the PUCCH resource, and a parameter 'format' which specifies the format of the PUCCH resource.

The parameter 'format' may take the value 'PUCCH-format0', PUCCH-format1', 'PUCCH-format2', 'PUCCH-format3' or 'PUCCH-format4'. Each PUCCH format specifies the PUCCH transmission with a subset of the following settings: initial cyclic shift, number of symbols for a PUCCH transmission, starting symbol index, time domain orthogonal cover code (OCC), OCC-index and OCC-length.

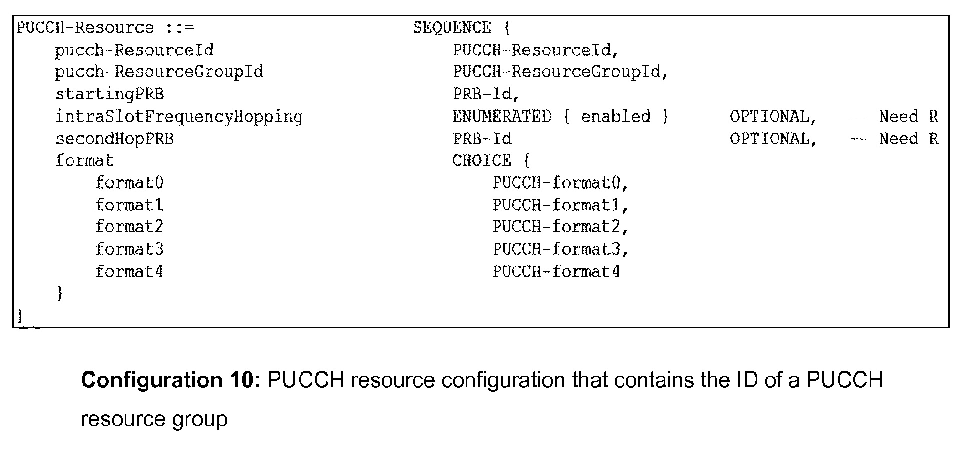

The purpose of the PUCCH resource group ID is to differentiate PUCCH resources that have different transmission settings (i.e., PUCCH-SpatialRelationlnfo settings). In a multi-TRP scenario, the PUCCH resources transmitted to a particular TRP may be assigned with the same value of 'PUCCH-ResourceGroupID'. The PUCCH-resource grouping may therefore be used to update the PUCCH-SpatialRelationlnfo settings of the PUCCH resources in a group via a single instance of MAC-CE signalling. Note that unlike the previous grouping solutions of PUCCH resources, a PUCCH-resource group here is not associated with a CORESET or a CORESET group, and hence it is not associated with a specific DL transmission. As such, the proposed scheme may be used for asymmetric multi-TRP DL/UL transmission.

In accordance with an embodiment, the UE is configured to receive from the gNB a MAC-CE message, the MAC-CE message containing at least the following parameters: a PUCCH resource group ID, a PUCCH-SpatialRelationlnfo ID, and optionally a BWP ID indicating a specific UL BWP and/or a serving cell ID indicating a configured cell for the UE.

When the UE receives the MAC-CE message, the PUCCH-SpatialRelationlnfo indicated by the PUCCH-SpatialRelationlnfo ID is applied by the UE to all PUCCH resources that are configured with the PUCCH-resource group ID indicated in the MAC-CE message. If a BWP ID is contained in the MAC-CE message, the UE applies the PUCCH-SpatialRelationlnfo only to the PUCCH resource(s) configured with the PUCCH resource group ID in the uplink BWP indicated by the BWP ID.

As demonstrated, several advantages are achieved by the embodiments herein which include at least:
Reducing signalling overhead and latency for beam switching at the UE, which is achieved by the join update solutions previously described.

Another advantaged is to facilitate faster beam switches, improve reliability of beam handovers and to exploit the scope of simultaneous DL and UL beam switching.

Another advantage is to provide a solution, while performing the joint update of Tx and RX settings that is applicable in both single-TRP and multi-TRP scenarios.

Additional advantages have already been demonstrated and need not be repeated again.

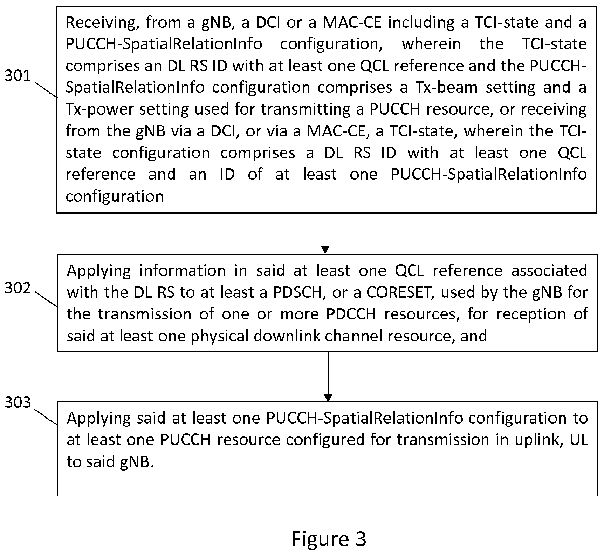

Below is a summary of the method performed by a UE according to the described embodiments and with reference to **Figure 3** depicting a flowchart of a method performed by the UE for a joint update of transmission, Tx, settings and receiving, Rx, settings at the UE.

As shown, the method performed by the UE comprises:
- receiving (301) from a gNB, via a DCI, or via a MAC-CE, a transmission TCI-state configuration and at least one PUCCH-SpatialRelationlnfo configuration indication on (e.g. in a single signalling occasion), wherein the indicated TCI-state configuration comprises, ID, of at least one DL RS with at least one QCL, reference and the indicated PUCCH-SpatialRelationlnfo configuration comprises a transmission-beam (Tx-beam) setting and a transmitter-power (Tx-power) setting used for transmitting a PUCCH resource, or
- receiving (301) from the gNB via a DCI, or via a MAC-CE, a TCI-state configuration indication, wherein the indicated TCI-state configuration comprises an ID of at least one DL RS with at least one QCL reference and an ID of at least one PUCCH-SpatialRelationInfo configuration;
- applying (302) information in said at least one QCL reference associated with the DL RS to at least a PDSCH or a ControlResourceSet (or CORESET) used by the gNB for the transmission of one or more physical downlink control channel resources, for reception of said at least one physical downlink channel resource, and
- applying (303) said at least one PUCCH-SpatialRelationlnfo configuration to at least one PUCCH resource configured for transmission in uplink, UL to said gNB.

According to an embodiment, the method comprising:
- receiving from the gNB a higher layer configuration of a CORESET associated with a CORESET group that comprises at least the following parameters:
   ∘ a CORESET group ID, 'CORESETgroupld', indicating the associated CORESET group of the CORESET,
   ∘ a CORESET ID which is unique for each CORESET configuration,
   ∘ parameters indicating a time-frequency resource configuration for the CORESET,
   ∘ parameters indicating a mapping configuration of a control channel element to a resource element group, and
   ∘ a parameter indicating precoder scrambling.

As previously described, the method may comprise
- receiving from the gNB a PUCCH resource configuration that comprises a parameter containing:
   ∘ a control resource set, CORESET ID, 'associatedCORESET', indicating the associated CORESET of the PUCCH resource, or
   ∘ a CORESET group ID, 'associatedCORESETgroup', indicating the associated CORESET group of the PUCCH resource, or
   ∘ a PUCCH resource group ID, 'PUCCH-ResourceGroupID', indicating the associated PUCCH resource group of the PUCCH resource,
   ∘ in addition to at least the following parameters:
   ∘ a PUCCH resource ID which is unique for each PUCCH resource configuration,
   ∘ parameters that provide a frequency hopping setting for the PUCCH resource, and
   ∘ a parameter 'format' which specifies the format of the PUCCH resource.

The method may further comprise:
- receiving from the gNB a MAC_CE message containing at least a serving-cell ID, one of either a CORESET ID or a CORESET group ID, a TCI-state ID and a PUCCH SpatialRelationlnfo ID; and
- applying the indicated TCI-state to the CORESET indicated by the CORESET ID or to the CORESETs configured with the indicated CORESET group ID, and the indicated PUCCH-SpatialRelationlnfo to one of the following PUCCH resources:
- the group of PUCCH resources configured with the indicated CORESET ID or the indicated CORESET group ID, or
any PUCCH resource indicated by the PUCCH resource indicator field in a DCI transmitted on the indicated CORESET or on the CORESETs configured with the indicated CORESET group ID.

The method may further comprises:
- receiving from the gNB a MAC_CE message containing at least a serving-cell ID, one of either a CORESET ID or a CORESET group ID, a TCI-state ID, a PUCCH resource group ID and a PUCCH SpatialRelationlnfo ID; and
- applying the indicated TCI-state to the CORESET indicated by the CORESET ID or to the CORESETs configured with the indicated CORESET group ID, and the indicated PUCCH-SpatialRelationlnfo to the group of PUCCH resources configured with the indicated PUCCH resource group ID.

The method may further comprise:
- receiving a DCI from the gNB that contains a TCI-state indication field and a PUCCH-SpatialRelationlnfo indication field, and
- applying the indicated TCI-state to the PDSCH scheduled by the DCI, and the indicated PUCCH-SpatialRelationlnfo indicated to either a PUCCH resource indicated in the DCI by a PUCCH resource indicator field, or any PUCCH resource indicated by a DCI transmitted on the CORESET on which the DCI containing the TCI-state indication is transmitted, or a group of PUCCH resources configured with a specific CORESET ID, CORESET group ID or a PUCCH resource group ID. The group of PUCCH resources may be configured with the same CORESET ID as the CORESET on which the DCI is transmitted, or configured with the same CORESET group ID as the CORESET on which the DCI is transmitted, or configured with the same PUCCH resource group ID as the PUCCH resource indicated by the PUCCH resource indicator in the DCI.

The method may further comprise:
- receiving from the gNB a MAC-CE message containing at least the following parameters: a CORESET ID or a CORESET group ID, a PUCCH-SpatialRelationlnfo ID; and
- applying the PUCCH-SpatialRelationlnfo, indicated by the PUCCH-SpatialRelationlnfo ID, to all PUCCH resources that are configured with the indicated CORESET ID/CORESET group ID in the MAC-CE message, or to any PUCCH resource indicated by the PUCCH resource indicator field in a DCI transmitted on the CORESET indicated by the CORESET ID or on the CORESETs configured with the indicated CORESET group ID.

The method may further comprise:
- receiving from the gNB a MAC-CE message containing at least the following parameters: a PUCCH resource group ID, a PUCCH-SpatialRelationlnfo ID; and
- applying the PUCCH-SpatialRelationlnfo, indicated by the PUCCH-SpatialRelationlnfo ID, to all PUCCH resources that are configured with the indicated PUCCH resource group ID in the MAC-CE message.

The method may further comprise:
- receiving from the gNB a MAC-CE message containing at least a serving-cell ID, one of either a CORESET ID or a CORESET group ID, a TCI-state ID that indicates a TCI-state configured with a PUCCH-SpatialRelationlnfo ID; and
- applying QCL reference information defined for each of DL RS(s) in the TCI-state parameter configuration to demodulation reference signal, DMRS, ports of physical downlink control channel(s), PDCCH(s) transmitted on the CORESET indicated by the CORESET ID or on the CORESETs configured with the indicated CORESET group ID, and the PUCCH-SpatialRelationlnfo indicated by the PUCCH-SpatialRelationlnfo ID in the TCI-state to one of the following PUCCH resources:
   ∘ the group of PUCCH resources configured with the indicated CORESET ID or the indicated CORESET group ID,
   ∘ any PUCCH resource indicated by the PUCCH resource indicator field in a DCI transmitted on the CORESET indicated by the CORESET ID or on the CORESETs configured with the indicated CORESET group ID.

The method may further comprise:
- receiving from the gNB a MAC-CE message containing at least a serving-cell ID, one of either a CORESET ID or a CORESET group ID, a TCI-state ID that indicates a TCI-state configured with a PUCCH-SpatialRelationlnfo ID and a PUCCH resource group ID; and
- applying QCL reference information defined for each of DL RS(s) in the TCI-state parameter configuration to demodulation reference signal, DMRS, ports of physical downlink control channel(s), PDCCH(s) transmitted on the CORESET indicated by the CORESET ID or on the CORESETs configured with the indicated CORESET group ID, and the PUCCH-SpatialRelationlnfo indicated by the PUCCH-SpatialRelationlnfo ID in the TCI-state to the group of PUCCH resources configured with the indicated PUCCH resource group ID.

The method may further comprise:
- receiving a DCI from the gNB that contains a TCI-state indication field that maps to a TCI-state configured with a PUCCH-SpatialRelationlnfo ID; and
- applying the QCL reference information defined for each of the DL RS(s) in the TCI-state to DMRS ports of a PDSCH scheduled by the DCI, and the PUCCH-SpatialRelationlnfo indicated in the TCI-state to either a PUCCH resource indicated in the DCI by a PUCCH resource indicator field, or any PUCCH resource indicated by a DCI transmitted on the CORESET on which the DCI containing the TCI-state indication is transmitted, or the group of PUCCH resources configured with a specific CORESET ID, CORESET group ID or a PUCCH resource group ID. The group of PUCCH resources may be configured with the same CORESET ID as the CORESET on which the DCI is transmitted, or configured with the same CORESET group ID as the CORESET on which the DCI is transmitted, or configured with the same PUCCH resource group ID as the PUCCH resource indicated by the PUCCH resource indicator in the DCI.

The method may further comprises:
- receiving in said MAC-CE message a BandWidth Part ID, BWP ID, indicating a specific UL BWP and/or a serving cell ID indicating a configured cell for the UE; and
- applying the PUCCH-SpatialRelationlnfo only to the said PUCCH resources configured in the uplink BWP indicated by the BWP ID.

The method may further comprise:
- applying the indicated TCI-state to the indicated CORESET(s) and/or the indicated PUCCH-SpatialRelationlnfo to all the said PUCCH resources in the same slot after reception of said MAC-CE.

The method may further comprises: receiving a PUCCH-SpatialRelationlnfo-application indicator from the gNB via physical layer or a higher layer, e.g., RRC or MAC, the PUCCH-SpatialRelationlnfo-application indicator indicates whether the PUCCH-SpatialRelationlnfo indicated in the DCI is applied by the UE to the PUCCH resource indicated by the PUCCH resource indicator in the DCI, or to a group of PUCCH resources; the group of PUCCH resources may be either a group of PUCCH resources configured with the same CORESET ID as the CORESET on which the DCI is transmitted, or any PUCCH resource indicated by any DCI transmitted on the CORESET on which the DCI indicating the TCI-state is transmitted, or a group PUCCH resources configured with the same CORESET group ID as the CORESET on which the DCI is transmitted, or a group of PUCCH resources configured with the same PUCCH resource group ID as the PUCCH resource indicated by the PUCCH resource indicator in the DCI.

The PUCCH-SpatialRelationlnfo-application indication received by the UE from the gNB via physical layer has either a size of *y* bits, hence present, or 0 bit, hence not present, and when the PUCCH-SpatialRelationlnfo indication field is not present in the DCI, the PUCCH-SpatialRelationlnfo-application indicator is not present, and when when PUCCH-SpatialRelationlnfo indication field in the DCI is of size *n*₂ bits, the PUCCH-SpatialRelationlnfo-application bit indicator is of size y bits.

The method may comprise receiving a PUCCH-SpatialRelationlnfo functionality indicator that combines the functions of the PUCCH-SpatialRelationlnfo size-indicator and the PUCCH-SpatialRelationlnfo application indicator, wherein the PUCCH-SpatialRelationlnfo functionality indicator is configured as an x-bit field in the DCI or an *x*-bit field in a MAC-CE message, and if the field is set to codepoint *p*₀, the PUCCH-SpatialRelationlnfo indication field in the DCI is of size 0 bits, and if the field is set to codepoint *p*₁, the PUCCH-SpatialRelationlnfo indication field in the DCI is of size *n*₂ bits and the PUCCH-SpatialRelationlnfo indicated in the DCI is applied by the UE to the PUCCH resource explicitly indicated in the DCI.

If the field is set to codepoint *p*₂, the PUCCH-SpatialRelationlnfo indication field in the DCI is of size *n*₂ bits and the PUCCH-SpatialRelationlnfo indicated by the DCI is applied by the UE to one of the groups of PUCCH resources.

The PUCCH-SpatialRelationlnfo functionality indicator is configured as an RRC parameter and the different indications provided by the code points *p*₀*, p*₁ and *p*₂ are be provided by the RRC parameter by configuring different values for the same.

The method may further comprise receiving from the gNB a MAC-CE message containing at least a serving cell ID, a CORESET ID or a CORESET group ID, a TCI-state ID and optionally, an octet containing a PUCCH-SpatialRelationlnfo ID, the MAC-CE message contains an *x*-bit indicator in one of the octets before the octet that is supposed to contain the PUCCH-SpatialRelationlnfo ID to indicate if the octet containing the PUCCH-SpatialRelationlnfo ID is present in the MAC-CE message or not, wherein, if the indicator is set to codepoint *p*₀, the octet containing the PUCCH-SpatialRelationlnfo ID is not present in the MAC-CE message, and wherein if the indicator is set to codepoint *p*₁,the octet containing the PUCCH-SpatialRelationlnfo ID is present in the MAC-CE message.

The method may comprise receiving: from the gNB a MAC-CE message containing at least a serving cell ID, a CORESET ID or a CORESET group ID, a TCI-state ID and optionally, an a PUCCH resource group ID and a PUCCH-SpatialRelationlnfo ID that may be contained in one or two octets, wherein the MAC-CE message contains an x-bit indicator in one of the octets before the octet(s) that is supposed to contain the PUCCH resource group ID and the PUCCH-SpatialRelationlnfo ID to indicate if the octet(s) containing the PUCCH resource group ID and the PUCCH-SpatialRelationlnfo ID is/are present in the MAC-CE message or not, wherein, if the indicator is set to codepoint *p*₀, the octet(s) containing the PUCCH resource group ID and the PUCCH-SpatialRelationlnfo ID is/are not present in the MAC-CE message, and wherein If the indicator is set to codepoint *p*₁, the octet(s) containing the PUCCH resource group ID and the PUCCH-SpatialRelationlnfo ID is/are present in the MAC-CE message.

The method may comprise: receiving a PUCCH-SpatialRelationlnfo application indicator via the physical layer or a higher layer (e.g., MAC, RRC) indicating whether the PUCCH-SpatialRelationlnfo indicated in the TCI-state that is indicated by a DCI should be applied by the UE only to the PUCCH resource indicated by the PUCCH resource indicator in the DCI, or to one of the following PUCCH resources: any PUCCH resource indicated by a DCI transmitted on a specific CORESET, or a group of PUCCH resources configured with a specific CORESET ID, CORESET group ID or a PUCCH resource group ID.

The PUCCH-SpatialRelationlnfo application indicator is received as an x-bit field in the DCI or a MAC-CE message, and on reception of the field with a value set to codepoint *p*₀, the UE applies the PUCCH-SpatialRelationlnfo indicated in the TCI-state to the PUCCH resource indicated in the DCI by the PUCCH resource indicator field.

The method may further comprise: on reception of the field with a value set to codepoint *p*₁, the UE applies the PUCCH-SpatialRelationlnfo indicated in the TCI-state to either a group of PUCCH resources configured with the same CORESET ID as the CORESET on which the DCI is transmitted, or any PUCCH resource that is indicated by the PUCCH resource indicator field in any DCI transmitted by the gNB on the same CORESET as the one in which the DCI containing the TCI-state indication is transmitted, or a group PUCCH resources configured with the same CORESET group ID as the CORESET on which the DCI is transmitted, or a group of PUCCH resources configured with the same PUCCH resource group ID as the PUCCH resource indicated by the PUCCH resource indicator in the DCI.

The PUCCH-SpatialRelationlnfo application indicator is configured as an RRC parameter and the different indications provided by the codepoints *p*₀ and *p*₁ are be provided by the RRC parameter by configuring different values for the same.

Additional embodiments relating to actions performed by the UE have already been described and need not be repeated again.

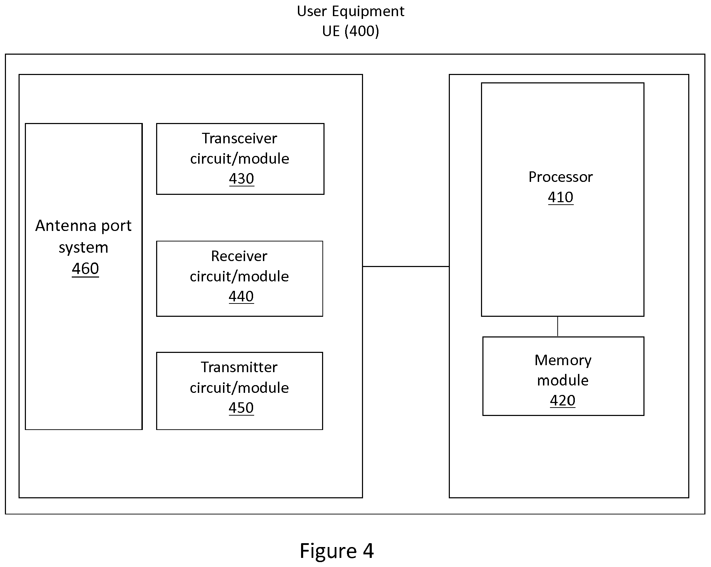

In order to perform the methods steps and operations of the UE previously described, there is also provided a UE 400, as shown in **Figure 4****,** which UE 400 comprises a processor 410 or processing circuit or a processing module or a processor or means 410; a receiver circuit or receiver module 440; a transmitter circuit or transmitter module 450; a memory module 420 a transceiver circuit or transceiver module 430 which may include the transmitter circuit 450 and the receiver circuit 440. The UE 400 further comprises an antenna system 460, which includes antenna circuitry for transmitting and receiving signals to/from at least the UE. The antenna system employs beamforming as previously described.

The UE 400 may operate in any radio access technology including 2G, 3G, 4G or LTE, LTE-A, 5G, WLAN, and WiMax etc. that support beamforming technology. The processing module/circuit 410 includes a processor, microprocessor, an application specific integrated circuit (ASIC), field programmable gate array (FPGA), or the like, and may be referred to as the "processor 410." The processor 410 controls the operation of the UE 400 and its components. Memory (circuit or module) 420 includes a random access memory (RAM), a read only memory (ROM), and/or another type of memory to store data and instructions that may be used by processor 410. In general, it will be understood that the UE 400 in one or more embodiments includes fixed or programmed circuitry that is configured to carry out the operations in any of the embodiments disclosed herein.

In at least one such example, the UE 400 includes a microprocessor, microcontroller, DSP, ASIC, FPGA, or other processing circuitry that is configured to execute computer program instructions from a computer program stored in a non-transitory computer-readable medium that is in, or is accessible to the processing circuitry. Here, "non-transitory" does not necessarily mean permanent or unchanging storage, and may include storage in working or volatile memory, but the term does connote storage of at least some persistence. The execution of the program instructions specially adapts or configures the processing circuitry to carry out the operations disclosed herein including anyone of method claims 1-19. Further, it will be appreciated that the UE 400 may comprise additional components not shown in Figure 4.

There is also provided a computer program comprising instructions which when executed on at least one processor of the UE according to claim 20, cause tat least said one processor to carry out the method according to anyone of claim 1-19.

There is also provided a method performed by a network node or gNB as previously described. In most of the previously described embodiment, the gNB is responsible to configure the UE with configuration information which may be sent in a plurality of message such as DCI, MAC-CE, higher-layer (RRC) signaling etc. for enabling the UE to perform the previously described embodiments. Hence, embodiments herein also provide for a method in a network node and a network node for configuring the UE. All details related tot eh function performed by the gNB have already been disclosed.

As described above there is also provided a network node or gNB (not shown) in order to perform the method steps and the previously described operations. The gNB comprises a processor or processing circuit or a processing module or a processor or means; a receiver circuit or receiver module; a transmitter circuit or transmitter module; a memory module a transceiver circuit or transceiver module which may include the transmitter circuit and the receiver circuit. The gNB further comprises an antenna system which includes antenna circuitry for transmitting and receiving/transmitting signals to/from at least the UE. The antenna system employs beamforming as previously described.

The gNB may operate in any radio access technology including 2G, 3G, 4G or LTE, LTE-A, 5G, WLAN, and WiMax etc. that support beamforming technology.

The processing module/circuit includes a processor, microprocessor, an application specific integrated circuit (ASIC), field programmable gate array (FPGA), or the like, and may be referred to as the "processor." The processor controls the operation of the gNB and its components. Memory (circuit or module) includes a random access memory (RAM), a read only memory (ROM), and/or another type of memory to store data and instructions that may be used by processor. In general, it will be understood that the gNB in one or more embodiments includes fixed or programmed circuitry that is configured to carry out the operations in any of the embodiments disclosed herein.

In at least one such example, the gNB includes a microprocessor, microcontroller, DSP, ASIC, FPGA, or other processing circuitry that is configured to execute computer program instructions from a computer program stored in a non-transitory computer-readable medium that is in, or is accessible to the processing circuitry. Here, "non-transitory" does not necessarily mean permanent or unchanging storage, and may include storage in working or volatile memory, but the term does connote storage of at least some persistence. The execution of the program instructions specially adapts or configures the processing circuitry to carry out the operations disclosed in this disclosure. Further, it will be appreciated that the gNB may comprise additional components.

There is also provided a computer program comprising instructions which when executed on at least one processor of the gNB, cause tat least said one processor to carry out the method described.

Throughout this disclosure, the word "comprise" or "comprising" has been used in a non-limiting sense, i.e. meaning, "consist at least of". Although specific terms may be employed herein, they are used in a generic and descriptive sense only and not for purposes of limitation. The embodiments herein may be applied in any wireless systems including GSM, 3G or WCDMA, LTE or 4G, LTE-A (or LTE-Advanced), 5G, WiMAX, WiFi, satellite communications, TV broadcasting etc. that may employ beamforming technology.

### References:

[1] 3GPP TS 38.214, "Physical layer procedures for data (Release 15)," March 2019.
[2] 3GPP TS 38.213, "Physical layer procedures for control (Release 15)," March 2019.
[3] 3GPP TS 38.331, "Radio Resource Control (RRC); Protocol specification (Release 15)," April 2019.
[4] 3GPP TS 38.212, "Multiplexing and channel coding (Release 15)," March 2019.
[5] 3GPP TS 38.321, "Medium Access Control (MAC) protocol specification (Release 15)," April 2019.
[6] 3GPP TS 38.101-2, "User Equipment (UE) radio transmission and reception; Part 2: Range 2 Standalone (Release 15)," April 2019.

## Claims

1. A method performed by a User Equipment, UE, for a joint update of transmission settings and receiving settings at the UE, the method comprising:
- receiving (301) from a network node, gNB, via a physical layer downlink control information, DCI, or via a medium access control-control element, MAC-CE, a transmission configuration indication state, TCI-state, and at least one physical uplink control channel configuration spatial relation information, PUCCH-SpatialRelationlnfo, configuration indication, wherein the indicated TCI-state configuration comprises an identifier, ID, of at least one downlink reference signal, DL RS with at least one quasi-co-location, QCL, reference and the indicated PUCCH-SpatialRelationlnfo configuration comprises a transmission-beam setting and a transmitter-power setting used for transmitting a physical uplink control channel, PUCCH resource, or
- receiving (301) from the gNB via a DCI, or via a MAC-CE, a TCI-state configuration indication, wherein the indicated TCI-state configuration comprises an ID of at least one DL RS with at least one QCL reference and an ID of at least one PUCCH-SpatialRelationlnfo configuration;
- applying (302) information in said at least one QCL reference associated with the DL RS to at least a physical downlink shared channel, PDSCH, or a ControlResourceSet, CORESET, used by the gNB for the transmission of one or more physical downlink control channel resources, for reception of said at least one physical downlink channel resource, and
- applying (303) said at least one PUCCH-SpatialRelationlnfo configuration to at least one PUCCH resource configured for transmission in uplink, UL to said gNB.

2. The method according to claim 1 comprising:
- receiving from the gNB a higher layer configuration of a CORESET associated with a CORESET group that comprises at least the following parameters:
∘ a CORESET group ID, 'CORESETgroupld', indicating the associated CORESET group of the CORESET,
∘ a CORESET ID which is unique for each CORESET configuration,
∘ parameters indicating a time-frequency resource configuration for the CORESET,
∘ parameters indicating a mapping configuration of a control channel element to a resource element group, and
∘ a parameter indicating precoder scrambling.

3. The method according to claim 1 comprising:
- receiving from the gNB a PUCCH resource configuration that comprises a parameter containing:
∘ a control resource set, CORESET ID, 'associatedCORESET', indicating the associated CORESET of the PUCCH resource, or
∘ a CORESET group ID, 'associatedCORESETgroup', indicating the associated CORESET group of the PUCCH resource, or
∘ a PUCCH resource group ID, 'PUCCH-ResourceGroupID', indicating the associated PUCCH resource group of the PUCCH resource,
- in addition to at least the following parameters:
∘ a PUCCH resource ID which is unique for each PUCCH resource configuration,
∘ parameters that provide a frequency hopping setting for the PUCCH resource, and
∘ a parameter 'format' which specifies the format of the PUCCH resource.

4. The method according to anyone of claims 1-3 comprising:
- receiving from the gNB a MAC_CE message containing at least a serving-cell ID, one of either a CORESET ID or a CORESET group ID, a TCI-state ID and a PUCCH SpatialRelationlnfo ID; and
- applying the indicated TCI-state to the CORESET indicated by the CORESET ID or to the CORESETs configured with the indicated CORESET group ID, and the indicated PUCCH-SpatialRelationlnfo to one of the following PUCCH resources:
- the group of PUCCH resources configured with the indicated CORESET ID or the indicated CORESET group ID, or
- any PUCCH resource indicated by the PUCCH resource indicator field in a DCI transmitted on the indicated CORESET or on the CORESETs configured with the indicated CORESET group ID.

5. The method according to anyone of claims 1-3 comprising:
- receiving from the gNB a MAC_CE message containing at least a serving-cell ID, one of either a CORESET ID or a CORESET group ID, a TCI-state ID, a PUCCH resource group ID and a PUCCH SpatialRelationInfo ID; and
- applying the indicated TCI-state to the CORESET indicated by the CORESET ID or to the CORESETs configured with the indicated CORESET group ID, and the indicated PUCCH-SpatialRelationlnfo to the group of PUCCH resources configured with the indicated PUCCH resource group ID.

6. The method according to anyone of claims 1-3 comprising:
- receiving a DCI from the gNB that contains a TCI-state indication field and a PUCCH-SpatialRelationlnfo indication field, and
- applying the indicated TCI-state to the PDSCH scheduled by the DCI, and the indicated PUCCH-SpatialRelationlnfo indicated to either a PUCCH resource indicated in the DCI by a PUCCH resource indicator field, or any PUCCH resource indicated by a DCI transmitted on the CORESET on which the DCI containing the TCI-state indication is transmitted, or a group of PUCCH resources configured with a specific CORESET ID, CORESET group ID or a PUCCH resource group ID. The group of PUCCH resources may be configured with the same CORESET ID as the CORESET on which the DCI is transmitted, or configured with the same CORESET group ID as the CORESET on which the DCI is transmitted, or configured with the same PUCCH resource group ID as the PUCCH resource indicated by the PUCCH resource indicator in the DCI.

7. The method according to anyone of claims 1-3 comprising:
- receiving from the gNB a MAC-CE message containing at least the following parameters: a CORESET ID or a CORESET group ID, a PUCCH-SpatialRelationlnfo ID; and
- applying the PUCCH-SpatialRelationlnfo, indicated by the PUCCH-SpatialRelationlnfo ID, to all PUCCH resources that are configured with the indicated CORESET ID/CORESET group ID in the MAC-CE message, or to any PUCCH resource indicated by the PUCCH resource indicator field in a DCI transmitted on the CORESET indicated by the CORESET ID or on the CORESETs configured with the indicated CORESET group ID.

8. The method according to anyone of claims 1-3 comprising:
- receiving from the gNB a MAC-CE message containing at least the following parameters: a PUCCH resource group ID, a PUCCH-SpatialRelationlnfo ID; and
- applying the PUCCH-SpatialRelationlnfo, indicated by the PUCCH-SpatialRelationlnfo ID, to all PUCCH resources that are configured with the indicated PUCCH resource group ID in the MAC-CE message.

9. The method according to anyone claims 1-3 comprising:
- receiving from the gNB a MAC-CE message containing at least a serving-cell ID, one of either a CORESET ID or a CORESET group ID, a TCI-state ID that indicates a TCI-state configured with a PUCCH-SpatialRelationlnfo ID; and
- applying QCL reference information defined for each of DL RS(s) in the TCI-state parameter configuration to demodulation reference signal, DMRS, ports of physical downlink control channel(s), PDCCH(s) transmitted on the CORESET indicated by the CORESET ID or on the CORESETs configured with the indicated CORESET group ID, and the PUCCH-SpatialRelationlnfo indicated by the PUCCH-SpatialRelationlnfo ID in the TCI-state to one of the following PUCCH resources:
∘ the group of PUCCH resources configured with the indicated CORESET ID or the indicated CORESET group ID,
∘ any PUCCH resource indicated by the PUCCH resource indicator field in a DCI transmitted on the CORESET indicated by the CORESET ID or on the CORESETs configured with the indicated CORESET group ID.

10. The method according to anyone of claims 1-3 comprising:
- receiving from the gNB a MAC-CE message containing at least a serving-cell ID, one of either a CORESET ID or a CORESET group ID, a TCI-state ID that indicates a TCI-state configured with a PUCCH-SpatialRelationlnfo ID and a PUCCH resource group ID; and
- applying QCL reference information defined for each of DL RS(s) in the TCI-state parameter configuration to demodulation reference signal, DMRS, ports of physical downlink control channel(s), PDCCH(s) transmitted on the CORESET indicated by the CORESET ID or on the CORESETs configured with the indicated CORESET group ID, and the PUCCH-SpatialRelationlnfo indicated by the PUCCH-SpatialRelationlnfo ID in the TCI-state to the group of PUCCH resources configured with the indicated PUCCH resource group ID.

11. The method according to anyone of claims 1-3 comprising:
- receiving a DCI from the gNB that contains a TCI-state indication field that maps to a TCI-state configured with a PUCCH-SpatialRelationlnfo ID; and
- applying the QCL reference information defined for each of the DL RS(s) in the TCI-state to DMRS ports of a PDSCH scheduled by the DCI, and the PUCCH-SpatialRelationlnfo indicated in the TCI-state to either a PUCCH resource indicated in the DCI by a PUCCH resource indicator field, or any PUCCH resource indicated by a DCI transmitted on the CORESET on which the DCI containing the TCI-state indication is transmitted, or the group of PUCCH resources configured with a specific CORESET ID, CORESET group ID or a PUCCH resource group ID. The group of PUCCH resources may be configured with the same CORESET ID as the CORESET on which the DCI is transmitted, or configured with the same CORESET group ID as the CORESET on which the DCI is transmitted, or configured with the same PUCCH resource group ID as the PUCCH resource indicated by the PUCCH resource indicator in the DCI.

12. The method according to anyone of claims 4-5, 7-10 comprising:
- receiving in said MAC-CE message a BandWidth Part ID, BWP ID, indicating a specific UL BWP and/or a serving cell ID indicating a configured cell for the UE; and
- applying the PUCCH-SpatialRelationlnfo only to the said PUCCH resources configured in the uplink BWP indicated by the BWP ID.

13. The method according to anyone of claims 4-5, 7-10 comprising:
- applying the indicated TCI-state to the indicated CORESET(s) and/or the indicated PUCCH-SpatialRelationlnfo to all the said PUCCH resources in the same slot after reception of said MAC-CE.

14. The method according to anyone of claims 4-5 comprising: receiving from the gNB a MAC-CE message containing at least a serving cell ID, a CORESET ID or a CORESET group ID, a TCI-state ID and optionally, an octet containing a PUCCH-SpatialRelationlnfo ID, the MAC-CE message contains an x-bit indicator in one of the octets before the octet that is supposed to contain the PUCCH-SpatialRelationlnfo ID to indicate if the octet containing the PUCCH-SpatialRelationlnfo ID is present in the MAC-CE message or not, wherein, if the indicator is set to codepoint *p*₀, the octet containing the PUCCH-SpatialRelationlnfo ID is not present in the MAC-CE message, and wherein if the indicator is set to codepoint *p*₁, the octet containing the PUCCH-SpatialRelationlnfo ID is present in the MAC-CE message.

15. The method according to anyone of claims 4-5 comprising: receiving from the gNB a MAC-CE message containing at least a serving cell ID, a CORESET ID or a CORESET group ID, a TCI-state ID and optionally, an a PUCCH resource group ID and a PUCCH-SpatialRelationlnfo ID that may be contained in one or two octets, wherein the MAC-CE message contains an x-bit indicator in one of the octets before the octet(s) that is supposed to contain the PUCCH resource group ID and the PUCCH-SpatialRelationlnfo ID to indicate if the octet(s) containing the PUCCH resource group ID and the PUCCH-SpatialRelationlnfo ID is/are present in the MAC-CE message or not, wherein, if the indicator is set to codepoint *p*₀, the octet(s) containing the PUCCH resource group ID and the PUCCH-SpatialRelationlnfo ID is/are not present in the MAC-CE message, and wherein If the indicator is set to codepoint *p*₁, the octet(s) containing the PUCCH resource group ID and the PUCCH-SpatialRelationlnfo ID is/are present in the MAC-CE message

16. The method according to claim 11 comprising receiving a PUCCH-SpatialRelationlnfo application indicator via the physical layer or a higher layer (e.g., MAC, RRC) indicating whether the PUCCH-SpatialRelationlnfo indicated in the TCI-state that is indicated by a DCI should be applied by the UE only to the PUCCH resource indicated by the PUCCH resource indicator in the DCI, or to one of the following PUCCH resources: any PUCCH resource indicated by a DCI transmitted on a specific CORESET, or a group of PUCCH resources configured with a specific CORESET ID, CORESET group ID or a PUCCH resource group ID

17. The method according to claim 16 wherein the PUCCH-SpatialRelationlnfo application indicator is received as an *x*-bit field in the DCI or a MAC-CE message, and on reception of the field with a value set to codepoint *p*₀, the UE applies the PUCCH-SpatialRelationlnfo indicated in the TCI-state to the PUCCH resource indicated in the DCI by the PUCCH resource indicator field.

18. The method according to claim 16 or 17 comprising: on reception of the field with a value set to codepoint *p*₁, the UE applies the PUCCH-SpatialRelationlnfo indicated in the TCI-state to either a group of PUCCH resources configured with the same CORESET ID as the CORESET on which the DCI is transmitted, or any PUCCH resource that is indicated by the PUCCH resource indicator field in a DCI transmitted by the gNB on the same CORESET as the one in which the DCI containing the TCI-state indication is transmitted, or a group PUCCH resources configured with the same CORESET group ID as the CORESET on which the DCI is transmitted, or a group of PUCCH resources configured with the same PUCCH resource group ID as the PUCCH resource indicated by the PUCCH resource indicator in the DCI.

19. The method according to claim 18 comprising: the PUCCH-SpatialRelationlnfo application indicator is configured as an RRC parameter and the different indications provided by the codepoints *p*₀ and *p*₁ are be provided by the RRC parameter by configuring different values for the same.

20. A User Equipment, UE, (400) comprising a processor (410) and a memory (420), said memory (420) containing instructions executable by said processor (410) whereby said UE (400) is operative to perform any one of the subject matter of method claims 1-19
